(19) Europäisches Patentamt
European Patent Office
Office européen des brevets

(11) **EP 4 723 727 A1**

(12) **EUROPEAN PATENT APPLICATION**
published in accordance with Art. 153(4) EPC

(43) Date of publication:
**08.04.2026 Bulletin 2026/15**

(21) Application number: **24810012.5**

(22) Date of filing: **07.03.2024**

(51) International Patent Classification (IPC):
**H04W 28/02** *(2009.01)* **H04L 27/00** *(2006.01)*

(52) Cooperative Patent Classification (CPC):
**H04L 27/00; H04W 28/02; H04W 36/08; H04W 76/15**

(86) International application number:
**PCT/CN2024/080483**

(87) International publication number:
**WO 2024/239763 (28.11.2024 Gazette 2024/48)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **25.05.2023 CN 202310603418**

(71) Applicant: **Datang Mobile Communications Equipment Co., Ltd.**
**Beijing 100085 (CN)**

(72) Inventors:
• **LIU, Ziqiao**
**Beijing 100085 (CN)**
• **CHEN, Li**
**Beijing 100085 (CN)**

(74) Representative: **Maiwald GmbH**
**Elisenhof**
**Elisenstraße 3**
**80335 München (DE)**

(54) **INFORMATION TRANSMISSION METHOD AND APPARATUS**

(57)    Provided are an information transmission method and apparatus, belonging to the technical field of communications. The method according to an embodiment of this disclosure embodiment includes: transmitting, by a first network device, packet loss information of at least one packet data unit set (PDU set) in a quality of service (QoS) flow to a second network device, where the first network device is a source base station or a first distributed unit (DU); in a case where the first network device is the source base station, the second network device is a target base station; or in a case where the first network device is the first distributed unit (DU), the second network device is a first centralized unit (CU) connected to the first DU.

> transmitting, by a first network device, packet loss information of at least one packet data unit set (PDU set) in a quality of service (QoS) flow to a second network device

201

FIG. 2

EP 4 723 727 A1

## Description

### CROSS-REFERENCE TO RELATED APPLICATION

The present disclosure claims a priority of Chinese Patent Application No. 202310603418.0 entitled "INFORMATION TRANSMISSION METHOD AND APPARATUS" filed on May 25, 2023, the entire contents of which are hereby incorporated by reference in their entirety.

### TECHNICAL FIELD

The present disclosure relates to the technical field of communications, particularly to an information transmission method and apparatus.

### BACKGROUND

In related technologies, extended reality (eXtended Reality, XR) services demand low latency, high throughput, and high reliability, requiring transmission of large data volumes within a short period. The concept of a protocol data unit (Protocol Data Unit, PDU) set has been introduced for the XR services. However, in Xn handover scenarios or dual connectivity (Dual Connectivity, DC) scenarios, there is currently no established solution to ensure transmission reliability of the PDU set for the XR services.

### SUMMARY

The present disclosure is to provide an information transmission method and apparatus, to solve a problem of ensuring the reliability of transmissions of PDU sets of an XR service in Xn handover scenarios or Dual Connectivity (DC) scenarios.

In order to achieve the above objective, the present disclosure provides an information transmission method, which includes:

transmitting, by a first network device, packet loss information of at least one packet data unit set (PDU set) in a quality of service (QoS) flow to a second network device,
where the first network device is a source base station or a first distributed unit (DU);
in a case where the first network device is the source base station, the second network device is a target base station; or
in a case where the first network device is the first distributed unit (DU), the second network device is a first centralized unit (CU) connected to the first DU.

In some embodiments, the packet loss information includes at least one of the following:

a first packet loss quantity, where the first packet loss quantity includes a quantity of erroneously transmitted PDU sets among the at least one PDU set that has been already transmitted by a first network device side; or
a second packet loss quantity, where the second packet loss quantity includes a quantity of erroneously transmitted PDUs by a first network device side among an incompletely transmitted PDU set by the first network device side of the at least one PDU set, where the incompletely transmitted PDU set includes a plurality of PDUs.

In some embodiments, the transmitting, by the first network device, the packet loss information of the at least one packet data unit set (PDU set) in the quality of service (QoS) flow to the second network device includes:

transmitting, by the source base station, the packet loss information of the at least one PDU set in the QoS flow to the target base station through an Xn interface signaling or a header of a data packet for data forwarding; or
transmitting, by the first DU, the packet loss information of the at least one PDU set in the QoS flow to the first CU through an F1 interface signaling.

In some embodiments, in a case where the first network device is the first DU and the second network device is the first CU, the transmitting, by the first network device, the packet loss information of the at least one packet data unit set (PDU set) in the quality of service (QoS) flow to the second network device includes:
transmitting, by the first DU, the packet loss information of the at least one PDU set in the QoS flow to the first CU according to a reporting period or a reporting request transmitted by the first CU.

In some embodiments, in a case where the packet loss information of the at least one PDU set in the QoS flow includes the second packet loss quantity, the method further includes:

obtaining, by the first network device, update indication information transmitted by the second network device; determining, by the first network device, an updated quantity of erroneously transmitted PDU sets in the QoS flow based on the update indication information; and

determining, by the first network device, a first PDU set error rate (PSER) based on the updated quantity of the erroneously transmitted PDU sets in the QoS flow, where the first PSER is used to indicate a ratio of the updated quantity of the erroneously transmitted PDU sets in the QoS flow to a quantity of the at least one PDU set in the QoS flow.

In some embodiments, the update indication information is used to indicate at least one of the following:

whether the incompletely transmitted PDU set in the at least one PDU set is the erroneously transmitted PDU set; a third packet loss quantity, where the third packet loss quantity includes a quantity of erroneously transmitted PDUs by a target base station side or a first CU side, among remaining PDUs in the incompletely transmitted PDU set of the at least one PDU set excluding PDUs already transmitted by the first network device side; or

a fourth packet loss quantity, where the fourth packet loss quantity includes a quantity of erroneously transmitted PDU sets by a target base station side or a first CU side among remaining PDU sets in the QoS flow excluding the PDU set that has been already transmitted by the first network device side.

In some embodiments, the method further includes: performing, by the first network device, resource scheduling for the QoS flow based on the first PSER.
An embodiment of the present disclosure further provides an information processing method, including:

obtaining, by a second network device, packet loss information of at least one packet data unit set (PDU set) in a quality of service (QoS) flow transmitted by a first network device, where the first network device is a source base station or a first distributed unit (DU), in a case where the first network device is the source base station, the second network device is a target base station, or in a case where the first network device is the first distributed unit (DU), the second network device is a first centralized unit (CU) connected to the first DU; and

executing, by the second network device, one or more of the following actions based on the packet loss information: performing resource scheduling for the QoS flow;

establishing a data transmission channel for the QoS flow; or

transmitting update indication information to the first network device, where the update indication information is used to indicate an updated quantity of erroneously transmitted PDU sets in the QoS flow to the first network device.

In some embodiments, the packet loss information includes at least one of the following:

a first packet loss quantity, where the first packet loss quantity includes a quantity of erroneously transmitted PDU sets among the at least one PDU set that has been already transmitted by a first network device side; or

a second packet loss quantity, where the second packet loss quantity includes a quantity of erroneously transmitted PDUs by a first network device side among an incompletely transmitted PDU set by the first network device side of the at least one PDU set, where the incompletely transmitted PDU set includes a plurality of PDUs.

In some embodiments, the obtaining, by the second network device, the packet loss information of the at least one packet data unit set (PDU set) in the quality of service (QoS) flow transmitted by the first network device includes:

obtaining, by the target base station, the packet loss information of the at least one PDU set in the QoS flow through an Xn interface signaling or a header of a data packet for data forwarding; or

obtaining, by the first CU, the packet loss information of the at least one PDU set in the QoS flow through an F1 interface signaling.

In some embodiments, in a case where the first network device is the source base station and the second network device is the target base station, the second network device performs resource scheduling for the QoS flow, or establishes a data transmission channel for the QoS flow based on the packet loss information of the at least one PDU set in the QoS flow; or in a case where the first network device is the first DU and the second network device is the first CU, the second network device establishes a data transmission channel for the QoS flow, or transmits the update indication information to the first network device.

In some embodiments, the performing, by the second network device, resource scheduling for the QoS flow, or establishing the data transmission channel for the QoS flow based on the packet loss information of the at least one PDU set in the QoS flow includes:

in a case where the packet loss information includes the second packet loss quantity, performing, by the second network device, resource scheduling for the QoS flow based on the second packet loss quantity; or, in a case where the packet loss information includes the first packet loss quantity, establishing, by the second network device, the data transmission channel for the QoS flow based on the first packet loss quantity.

In some embodiments, the performing, by the second network device, resource scheduling for the QoS flow based on the second packet loss quantity includes:

determining, by the second network device, a second PSER based on the second packet loss quantity, where the second PSER is used to indicate a ratio of a quantity of erroneously transmitted PDU sets among at least one transmitted PDU set in the QoS flow to a quantity of the at least one transmitted PDU set, after the incompletely transmitted PDU set from the first network device side has been completely transmitted by the second network device side; and

performing, by the second network device, resource scheduling for the QoS flow based on the second PSER.

In some embodiments, the determining, by the second network device, the second PSER based on the second packet loss quantity includes:

obtaining, by the second network device, a determination result based on the second packet loss quantity and the third packet loss quantity, where the determination result is used to indicate whether the incompletely transmitted PDU set is the erroneously transmitted PDU set, and the third packet loss quantity includes a quantity of erroneously transmitted PDUs by a target base station side or a first CU side, among remaining PDUs in the incompletely transmitted PDU set of the at least one PDU set excluding PDUs already transmitted by the first network device side; and

determining, by the second network device, the second PSER based on the determination result.

In some embodiments, the obtaining, by the second network device, the determination result based on the second packet loss quantity and the third packet loss quantity includes:

in a case where a target packet loss quantity is greater than or equal to a first preset threshold, determining the determination result to be that the incompletely transmitted PDU set is the erroneously transmitted PDU set; or

in a case where a ratio of a target packet loss quantity to a first transmission quantity is greater than a second preset threshold, determining the determination result to be that the incompletely transmitted PDU set is the erroneously transmitted PDU set,

where the target packet loss quantity is determined based on a sum of the second packet loss quantity and the third packet loss quantity, and the first transmission quantity is a quantity of PDUs included in the incompletely transmitted PDU set.

In some embodiments, the determining, by the second network device, the second PSER based on the determination result includes:

updating, by the second network device, the quantity of the erroneously transmitted PDU sets in the QoS flow, in a case where the determination result indicates that the incompletely transmitted PDU set is the erroneously transmitted PDU set; and

determining, by the second network device, the second PSER based on a ratio of the updated quantity of the erroneously transmitted PDU sets in the QoS flow to a quantity of the at least one PDU set already transmitted in the QoS flow.

In some embodiments, in a case where the second network device is the target base station, the second network device includes a second CU and at least one second DU,

the obtaining, by the second network device, the determination result based on the second packet loss quantity and the third packet loss quantity includes:

obtaining, by the second CU or the at least one second DU of the second network device, the determination result based on the second packet loss quantity and the third packet loss quantity.

In some embodiments, the method further includes: transmitting, by the second CU of the second network device, the determination result to the at least one second DU of the second network device.

In some embodiments, the method further includes: obtaining, by the at least one second DU of the second network device, the second packet loss quantity transmitted by the second CU of the second network device, where the second packet loss quantity is obtained by the second CU of the second network device from the first network device.

In some embodiments, the establishing, by the second network device, the data transmission channel for the QoS flow, or transmitting the update indication information to the first network device includes:

transmitting, by the second network device, the update indication information to the first network device, in a case where the packet loss information includes the second packet loss quantity; or establishing, by the second network device, the data transmission channel for the QoS flow, in a case where the packet loss information includes the first packet loss quantity.

In some embodiments, the update indication information is used to indicate at least one of the following:

whether the incompletely transmitted PDU set in the at least one PDU set is the erroneously transmitted PDU set; a third packet loss quantity, where the third packet loss quantity includes a quantity of erroneously transmitted PDUs by a target base station side or a first CU side, among remaining PDUs in the incompletely transmitted PDU set of the at least one PDU set excluding PDUs already transmitted by the first network device side; or a fourth packet loss quantity, where the fourth packet loss quantity includes a quantity of erroneously transmitted PDU sets by a target base station side or a first CU side among remaining PDU sets in the QoS flow excluding the PDU set that has been already transmitted by the first network device side.

An embodiment of the present disclosure further provides an information transmission apparatus, applied to a first network device, including a memory, a transceiver, and a processor. The memory is configured to store a computer program; the transceiver is configured to receive and transmit data under the control of the processor; and the processor is configured to read the computer program from the memory to perform the following operations:

transmitting packet loss information of at least one packet data unit set (PDU set) in a quality of service (QoS) flow to a second network device, where the first network device is a source base station or a first distributed unit (DU); in a case where the first network device is the source base station, the second network device is a target base station; or in a case where the first network device is the first distributed unit (DU), the second network device is a first centralized unit (CU) connected to the first DU.

In some embodiments, the packet loss information includes at least one of the following:

a first packet loss quantity, where the first packet loss quantity includes a quantity of erroneously transmitted PDU sets among the at least one PDU set that has been already transmitted by a first network device side; or a second packet loss quantity, where the second packet loss quantity includes a quantity of erroneously transmitted PDUs by a first network device side among an incompletely transmitted PDU set by the first network device side of the at least one PDU set, where the incompletely transmitted PDU set includes a plurality of PDUs.

In some embodiments, the processor is further configured to implement the following steps:

transmitting the packet loss information of the at least one PDU set in the QoS flow to the target base station through an Xn interface signaling or a header of a data packet for data forwarding; or transmitting the packet loss information of the at least one PDU set in the QoS flow to the first CU through an F1 interface signaling.

In some embodiments, in a case where the first network device is the first DU and the second network device is the first CU, the processor is further configured to implement the following steps: transmitting the packet loss information of the at least one PDU set in the QoS flow to the first CU according to a reporting period or a reporting request transmitted by the first CU.

In some embodiments, the processor is further configured to implement the following steps:

obtaining update indication information transmitted by the second network device;

determining an updated quantity of erroneously transmitted PDU sets in the QoS flow based on the update indication information; and

determining a first PDU set error rate (PSER) based on the updated quantity of the erroneously transmitted PDU sets in the QoS flow, where the first PSER is used to indicate a ratio of the updated quantity of the erroneously transmitted PDU sets in the QoS flow to a quantity of the at least one PDU set in the QoS flow.

In some embodiments, the update indication information is used to indicate at least one of the following:

whether the incompletely transmitted PDU set in the at least one PDU set is the erroneously transmitted PDU set; a third packet loss quantity, where the third packet loss quantity includes a quantity of erroneously transmitted PDUs by a target base station side or a first CU side, among remaining PDUs in the incompletely transmitted PDU set of the at least one PDU set excluding PDUs already transmitted by the first network device side; or a fourth packet loss quantity, where the fourth packet loss quantity includes a quantity of erroneously transmitted PDU sets by a target base station side or a first CU side among remaining PDU sets in the QoS flow excluding the PDU set that has been already transmitted by the first network device side.

In some embodiments, the processor is further configured to implement the following steps: performing resource scheduling for the QoS flow based on the first PSER.

An embodiment of the present disclosure further provides an information transmission apparatus, applied to a second network device, including a memory, a transceiver, and a processor. The memory is configured to store a computer program; the transceiver is configured to receive and transmit data under the control of the processor; and the processor is configured to read the computer program from the memory to perform the following operations:

obtaining packet loss information of at least one packet data unit set (PDU set) in a quality of service (QoS) flow transmitted by a first network device, where the first network device is a source base station or a first distributed unit (DU), in a case where the first network device is the source base station, the second network device is a target base station, or in a case where the first network device is the first distributed unit (DU), the second network device is a first centralized unit (CU) connected to the first DU; and

executing, by the second network device, one or more of the following actions based on the packet loss information: performing resource scheduling for the QoS flow; establishing a data transmission channel for the QoS flow; or transmitting update indication information to the first network device, where the update indication information is used to indicate an updated quantity of erroneously transmitted PDU sets in the QoS flow to the first network device.

In some embodiments, the packet loss information includes at least one of the following:

a first packet loss quantity, where the first packet loss quantity includes a quantity of erroneously transmitted PDU sets among the at least one PDU set that has been already transmitted by a first network device side; or a second packet loss quantity, where the second packet loss quantity includes a quantity of erroneously transmitted PDUs by a first network device side among an incompletely transmitted PDU set by the first network device side of the at least one PDU set, where the incompletely transmitted PDU set includes a plurality of PDUs.

In some embodiments, the processor is further configured to implement the following steps:

obtaining the packet loss information of the at least one PDU set in the QoS flow through an Xn interface signaling or a header of a data packet for data forwarding; or obtaining the packet loss information of the at least one PDU set in the QoS flow through an F1 interface signaling.

In some embodiments, the processor is further configured to implement the following steps:

in a case where the first network device is the source base station and the second network device is the target base station, performing resource scheduling for the QoS flow, or establishing a data transmission channel for the QoS flow based on the packet loss information of the at least one PDU set in the QoS flow; or in a case where the first network device is the first DU and the second network device is the first CU, establishing a data transmission channel for the QoS flow, or transmitting the update indication information to the first network device.

An embodiment of the present disclosure further provides an information transmission apparatus, applied to a first network device, including:

a first transmitting unit, configured to transmit packet loss information of at least one packet data unit set (PDU set) in a quality of service (QoS) flow to a second network device, where the first network device is a source base station or a first distributed unit (DU);

in a case where the first network device is the source base station, the second network device is a target base station; or

in a case where the first network device is the first distributed unit (DU), the second network device is a first centralized unit (CU) connected to the first DU.

An embodiment of the present disclosure further provides an information transmission apparatus, applied to a second network device, including:

a first obtaining unit, configured to obtain packet loss information of at least one packet data unit set (PDU set) in a quality of service (QoS) flow transmitted by a first network device, where the first network device is a source base station or a first distributed unit (DU), in a case where the first network device is the source base station, the second network device is a target base station, or in a case where the first network device is the first distributed unit (DU), the second network device is a first centralized unit (CU) connected to the first DU; and

an execution unit, configured to execute one or more of the following actions based on the packet loss information:

performing resource scheduling for the QoS flow;

establishing a data transmission channel for the QoS flow; or

transmitting update indication information to the first network device, where the update indication information is used to indicate an updated quantity of erroneously transmitted PDU sets in the QoS flow to the first network device.

An embodiment of the present disclosure further provides a processor readable storage medium, storing a computer program, where the computer program is configured to cause the processor to perform steps of the information transmission method mentioned above.

The above-mentioned technical solution of the present disclosure has at least the following beneficial effects.

In the embodiments of the present disclosure, a source base station transmits packet loss information of at least one PDU set in a quality of service (Quality of Service, QoS) flow to a target base station, or a first distributed unit (DU) transmits packet loss information of at least one PDU set in a QoS flow to a first centralized unit (CU). Based on the above scheme, interaction of packet loss information related to the PDU set in the QoS flow is introduced into an Xn handover scenario or a DC scenario, so that the corresponding network device in the Xn handover scenario or the DC scenario can take a corresponding action based on the packet loss information interacted to ensure the transmission reliability of the PDU set in the QoS flow of an XR service.

## BRIEF DESCRIPTION OF THE DRAWINGS

FIG. 1 shows a structural diagram of a network system that can be applied to an embodiment of the present disclosure;

FIG. 2 shows a first flow chart of an information transmission method according to an embodiment of the present disclosure;

FIG. 3 shows a second flow chart of an information transmission method according to an embodiment of the present disclosure;

FIG. 4 shows a block structural diagram of an information transmission apparatus according to an embodiment of the present disclosure;

FIG. 5 shows a first module schematic diagram of an information transmission apparatus according to an embodiment of the present disclosure; and

FIG. 6 shows a second module schematic diagram of an information transmission apparatus according to an embodiment of the present disclosure.

## DETAILED DESCRIPTION

In the following, technical solutions in embodiments of the present disclosure will be described in a clear and thorough manner with reference to the drawings in the embodiments of the present disclosure. Apparently, the described embodiments are merely a part of, rather than all of, the embodiments of the present disclosure. Based on the embodiments of the present disclosure, a person skilled in the art may, without creative effort, obtain other embodiments, all of which shall fall within the scope of the present disclosure.

Terms such as "first" and "second" in the specification and the claims of the present disclosure are used for distinguishing similar objects and are not necessarily used for describing a specific order or sequence. It should be understood that the terms used in this way may be interchanged under appropriate circumstances, so that the embodiments of the present application described herein may be implemented in a sequence other than those illustrated or described herein. In addition, terms such as "including" and "having" and any variations thereof are intended to cover non-exclusive inclusion. For example, a process, method, system, product or device including a series of steps or units is not limited to the steps or units that are clearly listed and may include other steps or units that are not clearly listed or are inherent in the process, method, product, or device.

The term "and/or" in the embodiments of the present disclosure describes an association relationship of associated objects, indicating that there may be three types of relationships. For example, A and/or B, which may represent three situations of A alone, both A and B, and B alone. The character "/" generally indicates that the associated objects before and after the character is in an "or" relationship.

In an embodiments of the present disclosure, words such as "exemplary" or "for example" are used to indicate as examples, illustrations, or explanations. Any embodiments or design schemes described as "exemplary" or "for example" in the present disclosure should not be interpreted as being more preferred or advantageous than other embodiments or design schemes. Specifically, the use of words such as "exemplary" or "for example" is intended to present relevant concepts in a concrete way.

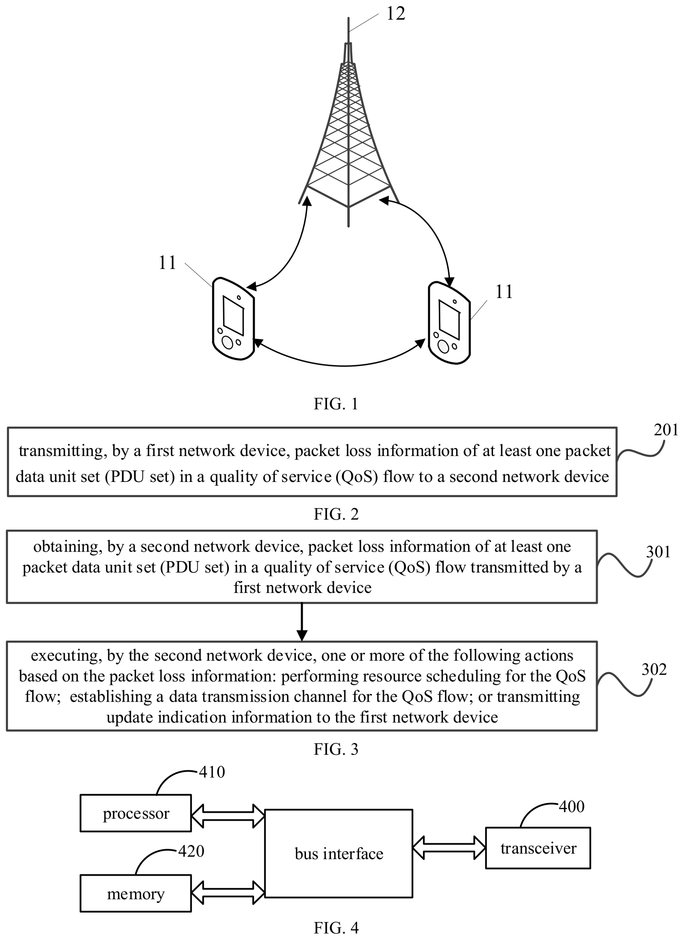

FIG. 1 shows a block diagram of a wireless communication system to which embodiments of the present disclosure can be applied. The wireless communication system includes a terminal device 11 and a network-side device (or network device) 12. The terminal device 11 may also be referred to as a terminal or user equipment (User Equipment, UE). It should be noted that a specific type of the terminal device 11 is not limited in the embodiments of the present disclosure. The network side device 12 may be a base station or a core network. It should be noted that in the embodiments of the present disclosure, a base station in a new radio (New Radio, NR) system is just taken as an example, but the specific type of base station is not limited.

To enable those skilled in the art to better understand the embodiments of the present disclosures, the following explanation is provided.

(1) XR service

Extended reality (eXtened Reality, XR) and cloud game (Cloud Game, CG), as one of the most important 5th generation mobile communication technology (5th Generation Mobile Communication Technology, 5G) media applications, have the requirements of low latency, high throughput, and high reliability. These applications demand transmission of large amounts of data within a short duration, which means that their burst throughput may far exceed an average throughput in a short duration. For example, an XR service with an average throughput of 100 Mbps may achieve a burst throughput of up to 300 Mbps within a short measurement window, while still ensuring high reliability. In XR services, performance requirements are defined per data frame, and Quality of Service (QoS) parameters of the XR services shall be guaranteed even in handover or dual connectivity (Dual Connectivity, DC) scenarios.

(2) Protocol Data Unit (Protocol Data Unit, PDU) set (set)

The concept of a PDU set is introduced for the XR services. A PDU set consists of one or more PDUs and carries payload of an information unit generated at the application layer. In some implementations, the application layer requires all PDUs in a PDU set to utilize the corresponding information unit. Currently, the 3rd generation partnership project (3rd Generation Partnership Project, 3GPP) has introduced PDU set QoS parameters (PDU set QoS parameter) for PDU sets, which include:

PDU set Error Rate (PDU-Set Error Rate, PSER). In related technologies, PSER is defined as an upper limit of a ratio of PDU sets where all PDUs in the PDU-Set (e.g., a set of IP packets forming the PDU set) have been processed by a sender of a link layer protocol (e.g., Radio Link Control (RLC) in the 3GPP Radio Access Network (RAN)) but have not been successfully delivered to an upper layer by a corresponding receiver (e.g., Packet Data Convergence Protocol (PDCP) in the 3GPP RAN). The upper limit of the PSER defines a maximum packet loss rate unrelated to congestion. The purpose of setting the PSER is to allow appropriate configuration of link layer protocols (e.g., RLC and Hybrid Automatic Repeat Request (HARQ) in the 3GPP RAN).

It should be noted that PSER is defined per QoS flow (per QoS flow). One QoS flow may include one or more PDU sets, where $$\mathrm{PSER} = \frac{\text{quantity of erroneously transmitted PDU sets}}{\text{quantity of PDU sets sent by a sender}}.$$

(3) Centralized unit (Centralized Unit, CU) / distributed unit (Distributed Unit, DU) split and control plane (Control Plane, CP) / user plane (User Plane, UP) split.

The next generation node B (the next Generation Node B, gNB) is divided into gNB-CU and gNB-DU, which are connected via an F1 interface. The CU includes a service data adaptation protocol (Service Data Adaptation Protocol, SDAP) layer and a packet data convergence protocol (Packet Data Convergence Protocol, PDCP) layer. The DU includes a radio link control (Radio Link Control, RLC) layer, a medium access control (Medium Access Control, MAC) layer, and a physical (Physical, PHY) layer.

An NR Node B (gNB)-CU may be further divided into one gNB-CU-CP and multiple gNB-CU-UPs. The gNB-CU-UP is connected to the gNB-DU via an F1-U interface, while the gNB-CU-CP is connected to the gNB-DU via an F1-C interface.

(4) DC Scenario

In a DC scenario, the CU decides to establish a second path or two paths and instructs DU1/DU2 to establish a data channel. This includes parameters such as a data radio bearer (Data Radio Bearer, DRB) identity (ID), a QoS parameter for each DRB, and a QoS parameter for the QoS flow ID mapped to each DRB. The CU centrally controls two DUs. One part of the data is transmitted between CU-DU1-UE, while another part of the data is transmitted between CU-DU2-UE.

(5) Xn Handover

The Xn handover procedure includes: a source base station decides to hand over a UE to a target base station based on a measurement report; a source gNB-CU sends a handover request to a target gNB-CU; the target gNB-CU establishes a UE context at a target gNB-DU and replies with a handover request acknowledgment message to the source gNB-CU, which carries data forwarding information; the source gNB-CU sends an F1 UE context modification procedure to a source gNB-DU, including a handover command for the UE and instructing the DU to stop transmitting data to the UE. Simultaneously, the source gNB-CU sends a sequence number (Sequence Number, SN) to the target gNB-CU and performs data forwarding. After the UE successfully completes random access, a core network updates a downlink transport network layer (Downlink Transport Network Layer, TNL) address. At this point, uplink and downlink data can be transmitted between the target base station and the UE, and the target gNB-CU sends a UE context release message, instructing the source gNB-CU to delete the UE context.

It should be noted that when the source side sends the handover request, it includes a PDU session resources to be setup list (PDU Session Resources To Be Setup List), which includes QoS flow parameters. Thus, the target side can establish a data transmission channel for each QoS flow based on the indicated QoS requirements.

As shown in FIG. 2, an embodiment of the present disclosure provides an information transmission method, which includes the following steps.

Step 201: transmitting, by a first network device, packet loss information of at least one packet data unit set (PDU set) in a quality of service (QoS) flow to a second network device.

The first network device is a source base station or a first distributed unit (DU). In a case where the first network device is the source base station, the second network device is a target base station; or in a case where the first network device is the first distributed unit (DU), the second network device is a first centralized unit (CU) connected to the first DU.

In some embodiments, in a case where the first network device is the first DU and the second network device is the first CU connected to the first DU, the first DU and the first CU belong to a same gNB, and the first CU may also include other DUs besides the first DU.

In a case where the first network device is the source base station and the second network device is the target base station, the first network device and the second network device correspond to different gNBs. If the second network device adopts a CU/DU separation architecture, the second network device may include a second CU and at least one second DU connected to the second CU.

In some embodiments, the first distributed unit (DU) includes at least one DU connected to the first CU.

In some embodiments, the source base station is a base station connected to a terminal before Xn handover, and the target base station is a base station connected to the terminal after Xn handover.

In an embodiment of the present disclosure, the source base station transmits packet loss information of the at least one PDU set in the QoS flow to the target base station, or the first DU transmits packet loss information of the at least one PDU set in the QoS flow to the first CU. Through the above scheme, interaction of packet loss information related to the PDU set in the QoS flow is introduced into an Xn handover scenario or a DC scenario, so that the corresponding network device in the Xn handover scenario or the DC scenario can take corresponding actions based on the packet loss information interacted to ensure the transmission reliability of the PDU set in the QoS flow of an XR service.

In some embodiments, the packet loss information includes at least one of the following:

first item: a first packet loss quantity, where the first packet loss quantity includes a quantity of erroneously transmitted PDU sets among the at least one PDU set that has been already transmitted by a first network device side;

second item: a second packet loss quantity, where the second packet loss quantity includes a quantity of erroneously transmitted PDUs by a first network device side among an incompletely transmitted PDU set by the first network device side of the at least one PDU set, where the incompletely transmitted PDU set includes a plurality of PDUs.

In some embodiments, the first packet loss quantity further includes a quantity of the at least one PDU set that has been already transmitted in the QoS flow.

In some embodiments, the second packet loss quantity further includes a quantity of PDUs that have been already transmitted among the incompletely transmitted PDU set by the first network device side of the at least one PDU set.

In an embodiment of the present disclosure, the first packet loss quantity and/or the second packet loss quantity may be transmitted between the source base station and the target base station via a handover request and/or an SN status transfer (SN status transfer) message.

For the first item mentioned above, in a case where the first DU includes at least two DUs, the first packet loss quantity includes a sum of quantities of erroneously transmitted PDU sets among at least one PDU set already transmitted on the at least two DU sides.

For the second item mentioned above, regarding the incompletely transmitted PDU set, assuming that the PDU set includes 10 PDUs, and 6 PDUs has been transmitted by the source side, among which 2 PDUs have lost their packets, the source side may transmit the packet loss quantity 2 and the quantity 6 of PDUs already transmitted by the source side to the target side via a handover request and/or an SN status transfer message.

In some embodiments, the transmitting, by the first network device, the packet loss information of the at least one packet data unit set (PDU set) in the quality of service (QoS) flow to the second network device includes:

transmitting, by the source base station, the packet loss information of the at least one PDU set in the QoS flow to the target base station through an Xn interface signaling or a header of a data packet for data forwarding; or

transmitting, by the first DU, the packet loss information of the at least one PDU set in the QoS flow to the first CU through an F1 interface signaling.

In the embodiment of the present disclosure, the above Xn interface signaling includes Xn handover request (Xn handover request) and/or sequence number state transfer. In a case where the source base station transmits the packet loss information to the target base station through the data packet used for data forwarding, the packet loss information may be added to the header (header) of general packet radio service tunnel protocol for the user plane (General Packet Radio Service Tunnel Protocol for the User plane, GTP-U).

The above F1 interface signaling includes gNB-DU configuration update (gNB-DU configuration update) signaling and/or gNB-CU configuration update acknowledge (gNB-CU configuration update acknowledge) signaling.

In some embodiments, in a case where the first network device is the first DU and the second network device is the first CU, the transmitting, by the first network device, the packet loss information of the at least one packet data unit set (PDU set) in the quality of service (QoS) flow to the second network device includes: transmitting, by the first DU, the packet loss information of the at least one PDU set in the QoS flow to the first CU according to a reporting period or a reporting request transmitted by the first CU.

In an embodiment of the present disclosure, the above reporting period may be a period configured by the first CU for the first DU or a period predetermined by a protocol.

In some embodiments, in a case where the packet loss information of the at least one PDU set in the QoS flow (where the first network device is the first DU and the second network device is the first CU) includes the second packet loss quantity, after the first network device transmits the packet loss information of the at least one packet data unit set (PDU set) in the QoS flow to the second network device, the method further includes:

obtaining, by the first network device, update indication information transmitted by the second network device;
determining, by the first network device, an updated quantity of erroneously transmitted PDU sets in the QoS flow based on the update indication information; and
determining, by the first network device, a first PSER based on the updated quantity of the erroneously transmitted PDU sets in the QoS flow, where the first PSER is used to indicate a ratio of the updated quantity of the erroneously transmitted PDU sets in the QoS flow to a quantity of the at least one PDU set in the QoS flow.

In some embodiments, the first PSER is used to indicate a ratio of the updated quantity of the erroneously transmitted PDU sets in the QoS flow to a quantity of the at least one PDU set in the QoS flow.

In some embodiments, the update indication information is used to indicate at least one of the following:

whether the incompletely transmitted PDU set in the at least one PDU set is the erroneously transmitted PDU set;

a third packet loss quantity, where the third packet loss quantity includes a quantity of erroneously transmitted PDUs by a target base station side or a first CU side, among remaining PDUs in the incompletely transmitted PDU set of the at least one PDU set excluding PDUs already transmitted by the first network device side; or

a fourth packet loss quantity, where the fourth packet loss quantity includes a quantity of erroneously transmitted PDU sets by a target base station side or a first CU side among remaining PDU sets in the QoS flow excluding the PDU set that has been already transmitted by the first network device side.

As an implementation, the determining, by the first network device, the updated quantity of the erroneously transmitted PDU sets in the QoS flow based on the update indication information includes: for an incompletely transmitted PDU set, obtaining a determination result based on the second packet loss quantity and the third packet loss quantity, and determining the updated quantity of the erroneously transmitted PDU sets in the QoS flow based on the determination result. The determination result is used to indicate whether the incompletely transmitted PDU set is an erroneously transmitted PDU set

As an implementation, the determining, by the first network device, the updated quantity of the erroneously transmitted PDU sets in the QoS flow based on the update indication information includes: determining a sum of the first packet loss quantity and the fourth packet loss quantity as the updated quantity of the erroneously transmitted PDU sets in the QoS flow.

In some embodiments, the method according to the embodiments of the present disclosures further includes: performing, by the first network device, resource scheduling for the QoS flow based on the first PSER.

In some embodiments, the first network device prioritizes allocating resources to the untransmitted PDU set in the QoS flow based on the first PSER, to reduce the PSER of the QoS flow, thereby meeting the requirements of this QoS flow.

In the embodiments of the present disclosure, the source base station transmits the packet loss information of the at least one PDU set in the QoS flow to the target base station, or the first DU transmits the packet loss information of the at least one PDU set in the QoS flow to the first CU. Through the above scheme, interaction of packet loss information related to PDU sets in the QoS flow is introduced into Xn handover scenarios or DC scenarios, enabling the relevant network device in the Xn handover or DC scenarios to take a corresponding action based on the exchanged packet loss information, so as to guarantee the reliability of PDU set transmission in the QoS flow for the XR services.

It should be noted that in the embodiments of the present disclosure, "transmitted" refers to what has been transmitted by the first network device to the terminal or what has been transmitted by the second network device to the terminal.

As shown in FIG. 3, an embodiment of the present disclosure further provides an information transmission method, which includes the following steps.

Step 301: obtaining, by a second network device, packet loss information of at least one packet data unit set (PDU set) in a quality of service (QoS) flow transmitted by a first network device, where the first network device is a source base station or a first distributed unit (DU), in a case where the first network device is the source base station, the second network device is a target base station, or in a case where the first network device is the first distributed unit (DU), the second network device is a first centralized unit (CU) connected to the first DU.

Step 302: executing, by the second network device, one or more of the following actions based on the packet loss information:

first item: performing resource scheduling for the QoS flow;
second item: establishing a data transmission channel for the QoS flow; or
third item: transmitting update indication information to the first network device, where the update indication information is used to indicate an updated quantity of erroneously transmitted PDU sets in the QoS flow to the first network device.

For the first item mentioned above, more resources are allocated to untransmitted data packets in the QoS flow based on the packet loss information to reduce the transmission error rate of the remaining data in the QoS flow.

For the second item mentioned above, a data transmission channel suitable for the untransmitted data packets in the QoS flow is established based on the packet loss information. For example, if the PESR of the QoS flow is determined to be very close to the required PESR based on the packet loss information, it is necessary to establish a high-quality and/or high-capacity data transmission channel to reduce the transmission error rate of the remaining data in the QoS flow.

For the third item mentioned above, the update indication information is transmitted to the first network device based on the packet loss information. In such a manner, the first network device may update the PSER according to the update indication information and may schedule resources for the QoS flow based on the updated PSER, so as to reduce the transmission error rate of the remaining data in the QoS flow.

In the embodiments of the present disclosure, the second network device obtains the packet loss information of the at least one packet data unit set (PDU set) in the QoS flow transmitted by the first network device, and performs resource scheduling for the QoS flow, establishes a data transmission channel for the QoS flow, and/or transmits update indication information to the first network device, based on the packet loss information, thereby ensuring the transmission reliability of PDU sets in the QoS flow for the XR services.

In some embodiments, the packet loss information includes at least one of the following:

a first packet loss quantity, where the first packet loss quantity includes a quantity of erroneously transmitted PDU sets among at least one PDU set that has been already transmitted by a first network device side; or
a second packet loss quantity, where the second packet loss quantity includes a quantity of erroneously transmitted PDUs by a first network device side among an incompletely transmitted PDU set by the first network device side of the at least one PDU set, where the incompletely transmitted PDU set includes a plurality of PDUs.

The packet loss information has been described in the method embodiments on the side of the first network device mentioned above, and will not be repeated here.

In some embodiments, the obtaining, by the first network device, the packet loss information of the at least one packet data unit set (PDU set) in the quality of service (QoS) flow transmitted by the second network device includes:

obtaining, by the target base station, the packet loss information of the at least one PDU set in the QoS flow through an Xn interface signaling or a header of a data packet for data forwarding; or
obtaining, by the first CU, the packet loss information of the at least one PDU set in the QoS flow through an F1 interface signaling.

In some embodiments, in a case where the first network device is the source base station and the second network device is the target base station, the second network device performs resource scheduling, or establishes a data transmission channel for the QoS flow based on the packet loss information of the at least one PDU set in the QoS flow; or in a case where the first network device is the first DU and the second network device is the first CU, the second network device establishes a data transmission channel for the QoS flow, or transmits the update indication information to the first network device.

In an embodiment of the present disclosure, in an Xn handover scenario, the target base station performs resource scheduling on the QoS flow or establishes a data transmission channel for the QoS flow based on the packet loss information transmitted by the source base station, to ensure the reliability of transmissions of the remaining data packets in the QoS flow. In a DC scenario, the first CU establishes a data transmission channel for the QoS flow based on the packet loss information transmitted by the first DU, to ensure the reliability of the transmissions of the remaining data packets in the QoS flow. Alternatively, update indication information may be transmitted to the first DU, so that the first DU performs a corresponding operation based on the update indication information, thereby ensuring the reliability of the transmissions of remaining data packets in the QoS flow.

In some embodiments, the performing, by the second network device, resource scheduling for the QoS flow, or establishing the data transmission channel for the QoS flow based on the packet loss information of the at least one PDU set in the QoS flow includes: in a case where the packet loss information includes the second packet loss quantity, performing, by the second network device, resource scheduling for the QoS flow based on the second packet loss quantity; or, in a case where the packet loss information includes the first packet loss quantity, establishing, by the second network device, the data transmission channel for the QoS flow based on the first packet loss quantity.

In the embodiments of the present disclosure, in Xn handover scenarios or DC scenarios, in a case where the packet loss information includes the second packet loss quantity, resource scheduling is performed on the QoS flow based on the second packet loss quantity, so as to reduce a transmission error rate of the remaining data of the QoS flow.

In the DC scenario, in a case where the packet loss information includes the first packet loss quantity, the second network device establishes a data transmission channel for the QoS flow based on the first packet loss quantity. If the first packet loss quantity is greater than a preset threshold, the first CU (CU1) adds path 2 (CU1-DU3-UE) on the basis of original path 1 (CU1-DU1-UE) based on the first packet loss quantity to transmit data packets of the QoS flow. The DU3 is a DU connected to the CU1.

In some embodiments, the performing, by the second network device, resource scheduling for the QoS flow based on the second packet loss quantity includes:

determining, by the second network device, a second PSER based on the second packet loss quantity, where the second PSER is used to indicate a ratio of a quantity of erroneously transmitted PDU sets among at least one incompletely transmitted PDU set in the QoS flow to a quantity of the at least one incompletely transmitted PDU set, after the incompletely transmitted PDU set from the first network device side has been completely transmitted by the second network device side; and

performing, by the second network device, resource scheduling for the QoS flow based on the second PSER.

In the Xn handover scenario, the second network device updates the PSER of the QoS flow based on the second packet loss quantity to obtain the updated PSER (i.e., the second PSER), and performs resource scheduling for the QoS flow based on the updated PSER.

For example, for an incompletely transmitted PDU set, assuming that the PDU set includes 10 PDUs, and 6 PDUs has been transmitted by the source side, among which 2 PDUs have lost their packets, the source side may transmit the packet loss quantity 2 and the quantity 6 of PDUs already transmitted by the source side to the target side via a handover request and/or an SN status transfer message. The target side transmits the remaining 4 PDUs. Assuming one of these PDUs is lost, the target side determines whether this PDU set was erroneously transmitted based on a relationship between (2 + 1) and a preset threshold, or based on a relationship between a ratio (2 + 1)/(4 + 6) and the preset threshold. Optionally, when calculating the PSER, the target side may consider only the remaining PDU set(s) to be transmitted by the target side, without the need to consider the PDU set(s) already transmitted by the source side. That is, if the source side has already transmitted 6 PDU sets, the 7th PDU set is transmitted across both sides, and the remaining 3 PDU sets are transmitted by the target side, and if the 7th PDU set is an erroneously transmitted PDU set, then the PSER calculated by the target side is: (1 + quantity of erroneously transmitted PDU sets among the remaining 3 PDU sets at the target side) / (1 + quantity of PDU sets transmitted by the target side, which is 3).

In some embodiments, the determining, by the second network device, the second PSER based on the second packet loss quantity includes:

obtaining, by the second network device, a determination result based on the second packet loss quantity and the third packet loss quantity, where the determination result is used to indicate whether the incompletely transmitted PDU set is the erroneously transmitted PDU set, and the third packet loss quantity includes a quantity of erroneously transmitted PDUs by a target base station side or a first CU side, among remaining PDUs in the incompletely transmitted PDU set of the at least one PDU set excluding PDUs already transmitted by the first network device side; and

determining, by the second network device, the second PSER based on the determination result.

In the Xn handover scenario, after receiving the second packet loss quantity, the target base station determine whether the PDU set is an erroneously transmitted (or transmission error) PDU set, by combining the third packet loss quantity of the PDU set on the target base station side or the first CU side, and determines the second PSER based on the determination result (determination result).

In some embodiments, the obtaining, by the second network device, the determination result based on the second packet loss quantity and the third packet loss quantity includes:

manner 1: in a case where a target packet loss quantity is greater than or equal to a first preset threshold, determining the determination result to be that the incompletely transmitted PDU set is the erroneously transmitted PDU set; or

manner 2: in a case where a ratio of a target packet loss quantity to a first transmission quantity is greater than a second preset threshold, determining the determination result to be that the incompletely transmitted PDU set is the erroneously transmitted PDU set,

where the target packet loss quantity is determined based on a sum of the second packet loss quantity and the third packet loss quantity (i.e., the target packet loss quantity is equal to the sum of the second packet loss quantity and the third packet loss quantity), and the first transmission quantity is a quantity of PDUs included in the incompletely transmitted PDU set.

The above manner 1 is to determine whether the PDU set is an erroneously transmitted PDU set based on the packet loss quantity, while the above manner 2 is to determine whether the PDU set is an erroneously transmitted PDU set based on the packet loss ratio. The first threshold and the second preset threshold mentioned above may be configured by the core network, agreed upon by a protocol, or defined by the base station itself.

In some embodiments, the determining, by the second network device, the second PSER based on the determination result includes:

updating, by the second network device, the quantity of the erroneously transmitted PDU sets in the QoS flow, in a case where the determination result indicates that the incompletely transmitted PDU set is the erroneously transmitted PDU set; and

determining, by the second network device, the second PSER based on a ratio of the updated quantity of the erroneously transmitted PDU sets in the QoS flow to a quantity of the at least one PDU set already transmitted in the QoS flow.

In some embodiments, in a case where the second network device is the target base station, the second network device includes a second CU and at least one second DU; the obtaining, by the second network device, the determination result based on the second packet loss quantity and the third packet loss quantity includes: obtaining, by the second CU or the at least one second DU of the second network device, the determination result based on the second packet loss quantity and the third packet loss quantity. The third packet loss quantity includes a quantity of erroneously transmitted PDUs on the target base station side among remaining PDUs in the incompletely transmitted PDU set excluding PDUs already transmitted by the first network device side.

In an embodiment of the present disclosure, in a scenario where the target base station includes a second CU and at least one second DU, the second CU or the at least one second DU of the second network device obtains the determination result based on the second packet loss quantity and the third packet loss quantity.

In some embodiments, after obtaining the determination result, the method further includes: transmitting, by the second CU of the second network device, the determination result to the at least one second DU of the second network device.

If the above determination result is obtained by the second CU side of the target base station, the second CU will inform the second DU of the target base station of the determination result through an F1 signaling, and the second DU of the target base station will determine the second PSER based on the determination result.

In some embodiments, in a case where at least one second DU of the second network device obtains the determination result, before obtaining the determination result, the method further includes: obtaining, by the at least one second DU of the second network device, the second packet loss quantity transmitted by the second CU of the second network device, where the second packet loss quantity is obtained by the second CU of the second network device from the first network device.

In an embodiment of the present disclosure, if the determination result is obtained by the second DU of the target base station, the second CU of the target base station needs to provide a second packet loss quantity on the source base station side to the second DU of the target base station.

In some embodiments, the transmitting, by the second network device, the update indication information to the first network device, or establishing the data transmission channel for the QoS flow includes:

transmitting, by the second network device, the update indication information to the first network device, in a case where the packet loss information includes the second packet loss quantity; or

establishing, by the second network device, the data transmission channel for the QoS flow, in a case where the packet loss information includes the first packet loss quantity.

In an embodiment of the present disclosure, in the DC scenario, in a case where the packet loss information includes the second packet loss quantity, the first CU transmits update indication information to the first DU; in a case where the packet loss information includes the first packet loss quantity, the first CU establishes a more suitable data transmission channel on the second DU side based on the first packet loss quantity and the PSER requirements of the QoS flow, so as to reduce the transmission error rate of the remaining data in the QoS flow and to achieve the goal of ensuring the transmission reliability of PDU sets in the QoS flow of the XR services.

In some embodiments, the update indication information is used to indicate at least one of the following:

whether the incompletely transmitted PDU set in the at least one PDU set is the erroneously transmitted PDU set;

a third packet loss quantity, where the third packet loss quantity includes a quantity of erroneously transmitted PDUs by a target base station side or a first CU side, among remaining PDUs in the incompletely transmitted PDU set of the at least one PDU set excluding PDUs already transmitted by the first network device side; or

a fourth packet loss quantity, where the fourth packet loss quantity includes a quantity of erroneously transmitted PDU sets by a target base station side or a first CU side among remaining PDU sets in the QoS flow excluding the PDU set that has been already transmitted by the first network device side.

The above scheme will be explained below in conjunction with the embodiments.

In a first embodiment of the present disclosure, in an Xn handover scenario, the source base station transmits a packet loss quantity within a PDU set on the source side (i.e., the aforementioned second packet loss quantity) to the target side via a handover request (handover request) and/or a sequence number status transfer (SN status transfer) (if both messages are sent, the SN status transfer can update the content carried in the handover request). The target side will know from which data packet it should start transmission via the SN status transfer, i.e., the target side knows how many data packets the source side has already sent. Alternatively, the source base station carries a packet loss quantity within a PDU set on the source side, and the number of data packets of this PDU set sent by a transmitter at the source side, via a handover request and/or an SN status transfer (if both messages are sent, the SN status transfer can update the content carried in the handover request).

For example, a PDU set includes 100 data packets, where packets 1 to 40 have been sent to the UE by the source side, and packets 26, 27, and 29 were lost. The source side informs the target base station of a packet loss quantity 3 via a handover request and/or an SN status transfer. The target base station side, via the SN status transfer or a quantity of data packets of this PDU set provided by the source side and sent by a transmitter at the source side, knows that it should transmit from packet 41 to packet 100. It is assumed that packets 50, 51, 52, and 53 are lost on the target base station side. The target base station determines that it lost 4 data packets, and determines a total packet loss quantity of 7 for this PDU set by combining the packet loss quantity 4 with the packet loss quantity 3 at the source side provided by the source side.

The target side determines whether to consider this PDU set as being erroneously transmitted based on a threshold configured by the core network, defined by a protocol, or implemented by the base station. For example, if the threshold is 0.1 %, but the current packet loss rate for this PDU set is 0.7%, which exceeds the threshold, the target side considers this PDU set as an erroneously transmitted PDU set. Alternatively, the target side determines whether to consider this PDU set as being erroneously transmitted based on a packet loss value configured by the core network, defined by a protocol, or implemented by the base station. For example, if a stipulated packet loss value is 6, but this PDU set has already lost 7 packets, even if the PDU set has not been completely transmitted, it can be determined that the packet loss threshold is exceeded, i.e., the target side considers this PDU set as an erroneously transmitted PDU set.

After the target side determines that the PDU set is erroneously transmitted, it counts it towards the PSER, i.e., the erroneously transmitted PDU set count is incremented by 1, and current

$$PESR = \frac{\text{quantity of erroneously transmitted PDU sets} + 1}{\text{quantity of PDU sets sent by the sender}}$$ . The target side performs underlying resource scheduling based on this PSER.

In a second embodiment of the present disclosure, during Xn handover, the source base station side triggers data forwarding. The GTP-U header of a data packet used for data forwarding may carry a second packet loss quantity within a PDU set on the source side (and optionally the quantity of data packets of this PDU set sent by a transmitter at the source side). Other implementations and effects are the same as those in the first embodiment and are not repeated here.

In the solutions of the present disclosure, for low-latency and high-throughput services during handover and in DC scenarios, whether a PDU set is erroneously transmitted is determined, and interaction of packet loss information is introduced, to reduce the transmission error rate of XR services.

It should be noted that the information transmission method executed by the second network device corresponds to the information transmission method executed by the first network device mentioned above. The specific interaction process between two devices has been explained in detail in the embodiments on the side of the first network device, and will not be repeated here.

As shown in FIG. 4, an embodiment of the present disclosure further provides an information transmission apparatus, which includes a memory 420, a transceiver 400, and a processor 410. The memory 420 is configured to store a computer program; and the transceiver 400 is configured to transmit and receive data under the control of the processor.

In an embodiment of the present disclosure, the information transmission apparatus is applied to a first network device, and the processor 410 is configured to read the computer program from the memory and performing the following operations: transmitting packet loss information of at least one packet data unit set (PDU set) in a quality of service (QoS) flow to a second network device, where the first network device is a source base station or a first distributed unit (DU); in a case where the first network device is the source base station, the second network device is a target base station; or in a case where the first network device is the first distributed unit (DU), the second network device is a first centralized unit (CU) connected to the first DU.

In an embodiment of the present disclosure, the information transmission apparatus is applied to a second network device, and the processor 410 is configured to read the computer program from the memory and performing the following operations:

obtaining, by a second network device, packet loss information of at least one packet data unit set (PDU set) in a quality of service (QoS) flow transmitted by a first network device, where the first network device is a source base station or a first distributed unit (DU), in a case where the first network device is the source base station, the second network device is a target base station, or in a case where the first network device is the first distributed unit (DU), the second network device is a first centralized unit (CU) connected to the first DU; and
executing, by the second network device, one or more of the following actions based on the packet loss information:
performing resource scheduling for the QoS flow;
establishing a data transmission channel for the QoS flow; or
transmitting update indication information to the first network device, where the update indication information is used to indicate an updated quantity of erroneously transmitted PDU sets in the QoS flow to the first network device.

In FIG. 4, the bus architecture may include any number of interconnected buses and bridges, specifically one or more processors represented by processor 410 and various circuits of memory represented by memory 420 connected together. The bus architecture may also link various other circuits such as peripheral devices, voltage regulators, and power management circuits together, which are well-known in this field. Therefore, this article will not further describe them. The bus interface provides interfaces. The transceiver 400 may be multiple components, including a transmitter and a receiver, providing a unit for communicating with various other devices over transmission media, including wireless channels, wired channels, optical cables, and other transmission media. The processor 410 is responsible for managing the bus architecture and usual processing, while the memory 420 may store the data used by the processor 410 when performing operations.

The processor 410 may be a central processing unit (Central Processing Unit, CPU), an application specific integrated circuit (Application Specific Integrated Circuit, ASIC), a field-programmable gate array (Field-Programmable Gate Array, FPGA) or a complex programmable logic device (Complex Programmable Logic Device, CPLD). The processor may also adopt a multi-core architecture.

It should be noted that the above-mentioned apparatus provided in the embodiment of the present disclosure can achieve all the method steps applied to the embodiment about the information transmission method, and can achieve the same technical effects. Therefore, the descriptions and beneficial effects of the embodiment same as the method embodiment will not be specifically described here.

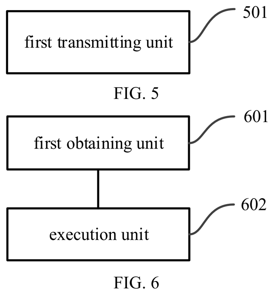

As shown in FIG. 5, an embodiment of the present disclosure further provides an information transmission apparatus, applied to a first network device. The apparatus includes: a first transmitting unit 501, configured to transmit packet loss information of at least one packet data unit set (PDU set) in a quality of service (QoS) flow to a second network device, where the first network device is a source base station or a first distributed unit (DU); in a case where the first network device is the source base station, the second network device is a target base station; or in a case where the first network device is the first distributed unit (DU), the second network device is a first centralized unit (CU) connected to the first DU.

In some embodiments, the packet loss information includes at least one of the following:

a first packet loss quantity, where the first packet loss quantity includes a quantity of erroneously transmitted PDU sets among the at least one PDU set that has been already transmitted by a first network device side; or
a second packet loss quantity, where the second packet loss quantity includes a quantity of erroneously transmitted PDUs by a first network device side among an incompletely transmitted PDU set by the first network device side of the at least one PDU set, where the incompletely transmitted PDU set includes a plurality of PDUs.

In some embodiments, the first transmitting unit is configured to: transmit the packet loss information of the at least one PDU set in the QoS flow to the target base station through an Xn interface signaling or a header of a data packet for data forwarding, in a case where the first network device is the source base station and the second network device is the target base station; or transmit the packet loss information of the at least one PDU set in the QoS flow to the first CU through an F1 interface signaling in a case where the first network device is the first DU and the second network device is the first CU.

In some embodiments, in a case where the first network device is the first DU and the second network device is the first CU, the first transmitting unit is configured to transmit the packet loss information of the at least one PDU set in the QoS flow to the first CU according to a reporting period or a reporting request transmitted by the first CU.

In some embodiments, in a case where the packet loss information of the at least one PDU set in the QoS flow includes the second packet loss quantity, the apparatus further includes:

a second obtaining unit, configured to obtain, by the first network device, update indication information transmitted by the second network device;
an update unit, configured to determine an updated quantity of erroneously transmitted PDU sets in the QoS flow based on the update indication information; and
a third obtaining unit, configured to determine a first PDU set error rate (PSER) based on the updated quantity of the erroneously transmitted PDU sets in the QoS flow, where the first PSER is used to indicate a ratio of the updated quantity of the erroneously transmitted PDU sets in the QoS flow to a quantity of the at least one PDU set in the QoS flow.

In some embodiments, the update indication information is used to indicate at least one of the following:

whether the incompletely transmitted PDU set in the at least one PDU set is the erroneously transmitted PDU set;
a third packet loss quantity, where the third packet loss quantity includes a quantity of erroneously transmitted PDUs by a target base station side or a first CU side, among remaining PDUs in the incompletely transmitted PDU set of the at least one PDU set excluding PDUs already transmitted by the first network device side; or
a fourth packet loss quantity, where the fourth packet loss quantity includes a quantity of erroneously transmitted PDU sets by a target base station side or a first CU side among remaining PDU sets in the QoS flow excluding the PDU set that has been already transmitted by the first network device side.

In some embodiments, the apparatus further includes: a scheduling unit, configured to perform resource scheduling for the QoS flow based on the first PSER.

It should be noted that the above-mentioned apparatus provided in the embodiment of the present disclosure may achieve all the method steps implemented in the embodiment about the information transmission method applied to the first network device, and can achieve the same technical effects. Therefore, the descriptions and beneficial effects of this embodiment same as the method embodiment will not be specifically described here.

As shown in FIG. 6, an embodiment of the present disclosure further provides an information transmission apparatus, applied to a second network device, and the apparatus includes:

a first obtaining unit 601, configured to obtain packet loss information of at least one packet data unit set (PDU set) in a quality of service (QoS) flow transmitted by a first network device, where the first network device is a source base station or a first distributed unit (DU), in a case where the first network device is the source base station, the second network device is a target base station, or in a case where the first network device is the first distributed unit (DU), the second network device is a first centralized unit (CU) connected to the first DU; and

an execution unit 602, configured to execute one or more of the following actions based on the packet loss information:

performing resource scheduling for the QoS flow;

establishing a data transmission channel for the QoS flow; or

transmitting update indication information to the first network device, where the update indication information is used to indicate an updated quantity of erroneously transmitted PDU sets in the QoS flow to the first network device.

In some embodiments, the packet loss information includes at least one of the following:

a first packet loss quantity, where the first packet loss quantity includes a quantity of erroneously transmitted PDU sets among the at least one PDU set that has been already transmitted by a first network device side; or

a second packet loss quantity, where the second packet loss quantity includes a quantity of erroneously transmitted PDUs by a first network device side among an incompletely transmitted PDU set by the first network device side of the at least one PDU set, where the incompletely transmitted PDU set includes a plurality of PDUs.

In some embodiments, the first obtaining unit 601 is configured to:

obtain the packet loss information of the at least one PDU set in the QoS flow to the target base station through an Xn interface signaling or a header of a data packet for data forwarding, in a case where the first network device is the source base station and the second network device is the target base station; or

obtain the packet loss information of the at least one PDU set in the QoS flow to the first CU through an F1 interface signaling in a case where the first network device is the first DU and the second network device is the first CU.

In some embodiments, the execution unit 602 is configured to: in a case where the first network device is the source base station and the second network device is the target base station, perform resource scheduling for the QoS flow, or establish a data transmission channel for the QoS flow based on the packet loss information of the at least one PDU set in the QoS flow; or in a case where the first network device is the first DU and the second network device is the first CU, establish a data transmission channel for the QoS flow, or transmit the update indication information to the first network device.

In some embodiments, the execution unit 602 is configured to: in a case where the packet loss information includes the second packet loss quantity, perform, by the second network device, resource scheduling for the QoS flow based on the second packet loss quantity; or, in a case where the packet loss information includes the first packet loss quantity, establish the data transmission channel for the QoS flow based on the first packet loss quantity.

In some embodiments, the execution unit 602 includes:

a determination subunit, configured to determine a second PSER based on the second packet loss quantity, where the second PSER is used to indicate a ratio of a quantity of erroneously transmitted PDU sets among at least one transmitted PDU set in the QoS flow to a quantity of the at least one transmitted PDU set, after the incompletely transmitted PDU set from the first network device side has been completely transmitted by the second network device side; and

a scheduling subunit, configured to perform resource scheduling for the QoS flow based on the second PSER.

In some embodiments, the determination subunit includes:

a judgement module, configured to obtain a determination result based on the second packet loss quantity and the third packet loss quantity, where the determination result is used to indicate whether the incompletely transmitted PDU set is the erroneously transmitted PDU set, and the third packet loss quantity includes a quantity of erroneously transmitted PDUs by a target base station side or a first CU side, among remaining PDUs in the incompletely transmitted PDU set of the at least one PDU set excluding PDUs already transmitted by the first network device side; and
a determining module, configured to determine the second PSER based on the determination result.

In some embodiments, the judgement module is configured to:

in a case where a target packet loss quantity is greater than or equal to a first preset threshold, determine the determination result to be that the incompletely transmitted PDU set is the erroneously transmitted PDU set; or
in a case where a ratio of a target packet loss quantity to a first transmission quantity is greater than a second preset threshold, determine the determination result to be that the incompletely transmitted PDU set is the erroneously transmitted PDU set,
where the target packet loss quantity is determined based on a sum of the second packet loss quantity and the third packet loss quantity, and the first transmission quantity is a quantity of PDUs included in the incompletely transmitted PDU set.

In some embodiments, the determining module includes:

an update submodule, configured to update the quantity of the erroneously transmitted PDU sets in the QoS flow, in a case where the determination result indicates that the incompletely transmitted PDU set is the erroneously transmitted PDU set; and
a determining submodule, configured to determine the second PSER based on a ratio of the updated quantity of the erroneously transmitted PDU sets in the QoS flow to a quantity of the at least one PDU set already transmitted in the QoS flow.

In some embodiments, in a case where the second network device is the target base station, the second network device includes a second CU and at least one second DU, the judgement module is configured to obtain, by the second CU or the at least one second DU of the second network device, the determination result based on the second packet loss quantity and the third packet loss quantity.

In some embodiments, the apparatus further includes: a second transmitting unit, configured to transmit, by the second CU of the second network device, the determination result to the at least one second DU of the second network device in a case that the judgement module obtains the determination result through the second CU of the second network device.

In some embodiments, the apparatus further includes: a fourth obtaining unit, configured to obtain, by the at least one second DU of the second network device, the second packet loss quantity transmitted by the second CU of the second network device in a case that the judgement module obtains the determination result through the at least one second DU of the second network device, where the second packet loss quantity is obtained by the second CU of the second network device from the first network device.

In some embodiments, the execution unit is configured to:

transmit, by the second network device, the update indication information to the first network device, in a case where the packet loss information includes the second packet loss quantity; or
establish, by the second network device, the data transmission channel for the QoS flow, in a case where the packet loss information includes the first packet loss quantity.

In some embodiments, the update indication information is used to indicate at least one of the following:

whether the incompletely transmitted PDU set in the at least one PDU set is the erroneously transmitted PDU set;
a third packet loss quantity, where the third packet loss quantity includes a quantity of erroneously transmitted PDUs by a target base station side or a first CU side, among remaining PDUs in the incompletely transmitted PDU set of the at least one PDU set excluding PDUs already transmitted by the first network device side; or
a fourth packet loss quantity, where the fourth packet loss quantity includes a quantity of erroneously transmitted PDU sets by a target base station side or a first CU side among remaining PDU sets in the QoS flow excluding the PDU set that has been already transmitted by the first network device side.

It should be noted that the above-mentioned apparatus provided in the embodiment of the present disclosure may achieve all the method steps implemented in the embodiment about the information transmission method applied to the second network device, and can achieve the same technical effects. Therefore, the descriptions and beneficial effects of this embedment that are the same as the method embodiments will not be described here in detail.

It should be noted that the division of units in the embodiments of the present disclosure is illustrative, and is only a logical function division, and there may be another division manner in actual implementation. In addition, the functional units in various embodiments of the present disclosure may be integrated into one processing unit, or each unit may exist separately physically, or two or more units may be integrated into one unit. The above-mentioned integrated units may be implemented in the form of hardware or in the form of software functional units.

If the integrated unit is implemented in the form of a software function unit and sold or used as an independent product, it can be stored in a processor-readable storage medium. Based on such an understanding, essential parts, or parts contributing to the related art, of the technical solution of the present disclosure, or all or a part of the technical solution may be implemented in a form of a software product. The computer software product is stored in a storage medium, and includes several instructions to enable a computer device (which may be a personal computer, a server, or a network device, etc.) or a processor to execute part or all of the steps of the methods described in the various embodiments of the present disclosure. The aforementioned storage media include: universal serial bus (USB) flash drive, removable hard disk, read-only memory (ROM), random access memory (RAM), magnetic disk, optical disc or other media that can store program codes.

An embodiment of the present disclosure further provides a processor readable storage medium, where the processor readable storage medium stores a computer program. The computer program is configured to cause the processor to execute all steps of the embodiment about the method performed by the first network device or the second network device, and can achieve the same technical effects. Therefore, the descriptions and beneficial effects of this embodiment same as the method embodiment will not be specifically described here.

The terminal device involved in the embodiments of the present disclosure may be a device that provides voice and/or data connectivity to a user, a handheld device with a radio connection function, or other processing devices connected to a radio modem or the like. In different systems, the names of terminal may be different. For example, in a 5G system, a terminal may be referred to as user equipment (User Equipment, UE). A wireless terminal can communicate with one or more core networks (Core Network, CN) via a radio access network (Radio Access Network, RAN), and the wireless terminal may be a mobile terminal, such as a mobile phone (or referred to as "cellular" phone) and a computer with a mobile terminal, such as a portable, pocket-sized, hand-held, computer built-in or vehicle-mounted mobile apparatus, which exchange voice and/or data with the radio access network. For example, personal communication service (Personal Communication Service, PCS) phones, cordless phones, session initiated protocol (Session Initiated Protocol, SIP) phones, wireless local loop (Wireless Local Loop, WLL) stations, personal digital assistant (Personal Digital Assistant, PDA) and other devices. The wireless terminal may also be referred to as a system, subscriber unit (subscriber unit), subscriber station (subscriber station), mobile station (mobile station), mobile (mobile), remote station (remote station), access point (access point), remote terminal (remote terminal), access terminal (access terminal), user terminal (user terminal), user agent (user agent) and user device (user device), which are not limited in the embodiments of the present disclosure.

The network device involved in the embodiments of the present disclosure may be a base station. The base station may include multiple cells that provide services to terminals. Depending on the specific application scenario, the base station may be called access point, or may be a device in the access network that communicates over an air interface with wireless terminal devices through one or more sectors, or may be called another name. The network device may be used for converting the received radio frames into Internet protocol (IP) packets or vice versa, and serves as a router between the wireless terminals and the rest of the access network. The rest of the access network may include an IP communication network. The network device may also coordinate the attribute management of the air interface. For example, the network device involved in the embodiments of the present disclosure may be a base transceiver station (BTS) in the global system for mobile communications (GSM) or code division multiple access (CDMA), a NodeB in the wide-band code division multiple access (WCDMA), an evolved Node B (eNB or e-NodeB) in long term evolution (LTE) system, a 5G base station (gNB) in 5G network architecture (next generation system), a home evolved Node B (HeNB), a relay node, a femto, a pico, or the like, which is not limited herein. In some network architectures, the network device may include a centralized unit (CU) node and a distributed unit (DU) node, which may be geographically separated.

The network device and the terminal may each perform multi-input multi-output (MIMO) transmission with each other by using one or more antennas. The MIMO transmission may be single user MIMO (SU-MIMO) or multiple user MIMO (MU-MIMO). According to the configuration and quantity of antenna combinations, the MIMO transmission may be 2 dimensional-MIMO (2D-MIMO), 3 dimensional-MIMO (3D-MIMO), full dimensional-MIMO (FD-MIMO) or massive-MIMO (massive-MIMO), and may be diversity transmission, pre-coded transmission, beam forming transmission, or the like.

Those skilled in the art should appreciate that the embodiments of the present disclosure may be provided as a method, a system, or a computer program product. Therefore, the present disclosure may take the form of complete hardware embodiments, complete software embodiments, or embodiments combining software and hardware. Moreover, the present disclosure may take the form of a computer program product implemented on one or more computer usable storage media (including but not limited to magnetic disk storage, optical storage, etc.) including a computer usable program code.

The present disclosure is described with reference to the flow chart and/or the block diagram of the method, device (system), and computer program product according to the embodiments of the present disclosure. It should be appreciated that each of processes and/or blocks in a flow chart and/or block diagram, and a combination of the processes and/or blocks in the flow chart and/or block diagram may be implemented by computer executable instructions. These computer executable instructions may be provided to a processor of a general-purpose computer, a specialized computer, an embedded processing device, or other programmable data processing devices to generate a machine, such that the instructions, which are executed via the processor of the computer or other programmable data processing terminal device, create means for implementing the functions specified in the flow diagram flow or flows and/or block diagram block or blocks.

These processor executable instructions may also be stored in processor-readable memory that may guide computers or other programmable data processing devices to work in a specific way, causing the instructions stored in the processor readable memory to generate a manufacturing product including instruction devices that implement the functions specified in the flow diagram flow or flows and/or block diagram block or blocks.

These processor executable instructions may also be loaded onto a computer or other programmable data processing device, enabling a series of operational steps to be performed on the computer or other programmable device to generate computer-implemented processing, such that the instructions which are executed on the computer or other programmable terminal device provide steps for implementing the functions specified in the flow diagram flow or flows and/or block diagram block or blocks.

It should be noted and understood that the division of the above modules is only a division of logical functions, which may be fully or partially integrated into a physical entity or physically separated in actual implementations. These modules may all be implemented in the form of software called by processing elements; or may all be implemented in the form of hardware; or, some modules may be implemented in the form of software called by processing elements, and some modules may be implemented in the form of hardware. For example, the determination module may be a separate processing element, or may be integrated into a certain chip of the above device, or, may be stored in the memory of the above device in the form of program code which is called and executed by a certain processing element of the above device to perform the functions of the determination module. Other modules have similar implementations. In addition, all or part of these modules may be integrated together, and may be implemented independently. The processing element mentioned here may be an integrated circuit with signal processing capability. In the implementation process, the various steps of the above method or the above various modules may be implemented by an integrated logic circuit in hardware form in elements of a processor or instructions in the form of software.

For example, the various modules, units, subunits or submodules may be one or more integrated circuits configured to implement the above methods, such as one or more application specific integrated circuits (ASIC), or one or more microprocessors (digital signal processor, DSP), or one or more field programmable gate arrays (FPGA). As another example, when a module described above is implemented in the form of program codes called by a processing element, the processing element may be a general purpose processor, such as a central processing unit (CPU) or other processors that may call program codes. As another example, these modules may be integrated together and implemented as a system-on-a-chip (SOC).

Terms such as "first" and "second" in the specification and the claims of the present disclosure are used for distinguishing similar objects and are not necessarily used for describing a specific order or sequence. It should be understood that the terms used in this way may be interchanged under appropriate circumstances, so that the embodiments of the present application described herein may be implemented in a sequence other than those illustrated or described herein. In addition, terms such as "including" and "having" and any variations thereof are intended to cover non-exclusive inclusion. For example, a process, method, system, product or device including a series of steps or units is not limited to the steps or units that are clearly listed and may include other steps or units that are not clearly listed or are inherent in the process, method, product, or device. Moreover, the term "and/or" used in the specification and the claims indicates at least one of connected objects, for example, A and/or B and/or C means 7 situations including: A alone, B alone, C alone, both A and B, both B and C, both A and C, and all of A, B and C. Similarly, the use of "at least one of A and B" in this specification and claims should be understood as "A alone, B alone, or both A and B".

Apparently, a person of ordinary skills in the art can make various modifications and variations to the present disclosure without departing from the spirit and scope of the present disclosure. In this way, if these modifications and variations of the present disclosure fall within the scope of the claims and their equivalent technologies, the present disclosure also intends to include these modifications and variations.

**Claims**

1. An information transmission method, comprising:

   transmitting, by a first network device, packet loss information of at least one packet data unit set (PDU set) in a quality of service (QoS) flow to a second network device,
   wherein the first network device is a source base station or a first distributed unit (DU);
   in a case where the first network device is the source base station, the second network device is a target base station; or
   in a case where the first network device is the first distributed unit (DU), the second network device is a first centralized unit (CU) connected to the first DU.

2. The method according to claim 1, wherein the packet loss information comprises at least one of the following:

   a first packet loss quantity, wherein the first packet loss quantity comprises a quantity of erroneously transmitted PDU sets among the at least one PDU set that has been already transmitted by a first network device side; or
   a second packet loss quantity, wherein the second packet loss quantity comprises a quantity of erroneously transmitted PDUs by a first network device side among an incompletely transmitted PDU set by the first network device side of the at least one PDU set, wherein the incompletely transmitted PDU set comprises a plurality of PDUs.

3. The method according to claim 1 or 2, wherein the transmitting, by the first network device, the packet loss information of the at least one packet data unit set (PDU set) in the quality of service (QoS) flow to the second network device comprises:

   transmitting, by the source base station, the packet loss information of the at least one PDU set in the QoS flow to the target base station through an Xn interface signaling or a header of a data packet for data forwarding; or
   transmitting, by the first DU, the packet loss information of the at least one PDU set in the QoS flow to the first CU through an F1 interface signaling.

4. The method according to claim 1 or 2, wherein in a case where the first network device is the first DU and the second network device is the first CU, the transmitting, by the first network device, the packet loss information of the at least one packet data unit set (PDU set) in the quality of service (QoS) flow to the second network device comprises:
   transmitting, by the first DU, the packet loss information of the at least one PDU set in the QoS flow to the first CU according to a reporting period or a reporting request transmitted by the first CU.

5. The method according to claim 2, wherein in a case where the packet loss information of the at least one PDU set in the QoS flow comprises the second packet loss quantity, the method further comprises:

   obtaining, by the first network device, update indication information transmitted by the second network device;
   determining, by the first network device, an updated quantity of erroneously transmitted PDU sets in the QoS flow based on the update indication information; and
   determining, by the first network device, a first PDU set error rate (PSER) based on the updated quantity of the erroneously transmitted PDU sets in the QoS flow, wherein the first PSER is used to indicate a ratio of the updated quantity of the erroneously transmitted PDU sets in the QoS flow to a quantity of the at least one PDU set in the QoS flow.

6. The method according to claim 5, wherein the update indication information is used to indicate at least one of the following:

   whether the incompletely transmitted PDU set in the at least one PDU set is the erroneously transmitted PDU set;
   a third packet loss quantity, wherein the third packet loss quantity comprises a quantity of erroneously transmitted PDUs by a target base station side or a first CU side, among remaining PDUs in the incompletely transmitted PDU set of the at least one PDU set excluding PDUs already transmitted by the first network device side; or
   a fourth packet loss quantity, wherein the fourth packet loss quantity comprises a quantity of erroneously transmitted PDU sets by a target base station side or a first CU side among remaining PDU sets in the QoS flow excluding the PDU set that has been already transmitted by the first network device side.

7. The method according to claim 5 or 6, further comprising:
performing, by the first network device, resource scheduling for the QoS flow based on the first PSER.

8. An information processing method, comprising:

obtaining, by a second network device, packet loss information of at least one packet data unit set (PDU set) in a quality of service (QoS) flow transmitted by a first network device, wherein the first network device is a source base station or a first distributed unit (DU), in a case where the first network device is the source base station, the second network device is a target base station, or in a case where the first network device is the first distributed unit (DU), the second network device is a first centralized unit (CU) connected to the first DU; and
executing, by the second network device, one or more of the following actions based on the packet loss information:

performing resource scheduling for the QoS flow;
establishing a data transmission channel for the QoS flow; or
transmitting update indication information to the first network device, wherein the update indication information is used to indicate an updated quantity of erroneously transmitted PDU sets in the QoS flow to the first network device.

9. The method according to claim 8, wherein the packet loss information comprises at least one of the following:

a first packet loss quantity, wherein the first packet loss quantity comprises a quantity of erroneously transmitted PDU sets among the at least one PDU set that has been already transmitted by a first network device side; or
a second packet loss quantity, wherein the second packet loss quantity comprises a quantity of erroneously transmitted PDUs by a first network device side among an incompletely transmitted PDU set by the first network device side of the at least one PDU set, wherein the incompletely transmitted PDU set comprises a plurality of PDUs.

10. The method according to claim 8 or 9, wherein the obtaining, by the second network device, the packet loss information of the at least one packet data unit set (PDU set) in the quality of service (QoS) flow transmitted by the first network device comprises:

obtaining, by the target base station, the packet loss information of the at least one PDU set in the QoS flow through an Xn interface signaling or a header of a data packet for data forwarding; or
obtaining, by the first CU, the packet loss information of the at least one PDU set in the QoS flow through an F1 interface signaling.

11. The method according to claim 9, further comprising:

in a case where the first network device is the source base station and the second network device is the target base station, performing, by the second network device, resource scheduling for the QoS flow, or establishing a data transmission channel for the QoS flow based on the packet loss information of the at least one PDU set in the QoS flow; or
in a case where the first network device is the first DU and the second network device is the first CU, establishing, by the second network device, a data transmission channel for the QoS flow, or transmitting the update indication information to the first network device.

12. The method according to claim 11, wherein the performing, by the second network device, resource scheduling for the QoS flow, or establishing the data transmission channel for the QoS flow based on the packet loss information of the at least one PDU set in the QoS flow comprises:
in a case where the packet loss information comprises the second packet loss quantity, performing, by the second network device, resource scheduling for the QoS flow based on the second packet loss quantity; or, in a case where the packet loss information comprises the first packet loss quantity, establishing, by the second network device, the data transmission channel for the QoS flow based on the first packet loss quantity.

13. The method according to claim 12, wherein the performing, by the second network device, resource scheduling for the QoS flow based on the second packet loss quantity comprises:

determining, by the second network device, a second PSER based on the second packet loss quantity, wherein the second PSER is used to indicate a ratio of a quantity of erroneously transmitted PDU sets among at least one transmitted PDU set in the QoS flow to a quantity of the at least one transmitted PDU set, after the incompletely transmitted PDU set from the first network device side has been completely transmitted by the second network device side; and

performing, by the second network device, resource scheduling for the QoS flow based on the second PSER.

14. The method according to claim 13, wherein the determining, by the second network device, the second PSER based on the second packet loss quantity comprises:

obtaining, by the second network device, a determination result based on the second packet loss quantity and the third packet loss quantity, wherein the determination result is used to indicate whether the incompletely transmitted PDU set is the erroneously transmitted PDU set, and the third packet loss quantity comprises a quantity of erroneously transmitted PDUs by a target base station side or a first CU side, among remaining PDUs in the incompletely transmitted PDU set of the at least one PDU set excluding PDUs already transmitted by the first network device side; and

determining, by the second network device, the second PSER based on the determination result.

15. The method according to claim 14, wherein the obtaining, by the second network device, the determination result based on the second packet loss quantity and the third packet loss quantity comprises:

in a case where a target packet loss quantity is greater than or equal to a first preset threshold, determining the determination result to be that the incompletely transmitted PDU set is the erroneously transmitted PDU set; or

in a case where a ratio of a target packet loss quantity to a first transmission quantity is greater than a second preset threshold, determining the determination result to be that the incompletely transmitted PDU set is the erroneously transmitted PDU set,

wherein the target packet loss quantity is determined based on a sum of the second packet loss quantity and the third packet loss quantity, and the first transmission quantity is a quantity of PDUs comprised in the incompletely transmitted PDU set.

16. The method according to claim 14 or 15, wherein the determining, by the second network device, the second PSER based on the determination result comprises:

updating, by the second network device, the quantity of the erroneously transmitted PDU sets in the QoS flow, in a case where the determination result indicates that the incompletely transmitted PDU set is the erroneously transmitted PDU set; and

determining, by the second network device, the second PSER based on a ratio of the updated quantity of the erroneously transmitted PDU sets in the QoS flow to a quantity of the at least one PDU set already transmitted in the QoS flow.

17. The method according to claim 14, wherein in a case where the second network device is the target base station, the second network device comprises a second CU and at least one second DU,

the obtaining, by the second network device, the determination result based on the second packet loss quantity and the third packet loss quantity comprises:

obtaining, by the second CU or the at least one second DU of the second network device, the determination result based on the second packet loss quantity and the third packet loss quantity.

18. The method according to claim 17, further comprising:

transmitting, by the second CU of the second network device, the determination result to the at least one second DU of the second network device.

19. The method according to claim 17, further comprising:

obtaining, by the at least one second DU of the second network device, the second packet loss quantity transmitted by the second CU of the second network device, wherein the second packet loss quantity is obtained by the second CU of the second network device from the first network device.

**20.** The method according to claim 11, wherein the establishing, by the second network device, the data transmission channel for the QoS flow, or transmitting the update indication information to the first network device comprises:

transmitting, by the second network device, the update indication information to the first network device, in a case where the packet loss information comprises the second packet loss quantity; or
establishing, by the second network device, the data transmission channel for the QoS flow, in a case where the packet loss information comprises the first packet loss quantity.

**21.** The method according to claim 11 or 20, wherein the update indication information is used to indicate at least one of the following:

whether the incompletely transmitted PDU set in the at least one PDU set is the erroneously transmitted PDU set;
a third packet loss quantity, wherein the third packet loss quantity comprises a quantity of erroneously transmitted PDUs by a target base station side or a first CU side, among remaining PDUs in the incompletely transmitted PDU set of the at least one PDU set excluding PDUs already transmitted by the first network device side; or
a fourth packet loss quantity, wherein the fourth packet loss quantity comprises a quantity of erroneously transmitted PDU sets by a target base station side or a first CU side among remaining PDU sets in the QoS flow excluding the PDU set that has been already transmitted by the first network device side.

**22.** An information transmission apparatus, applied to a first network device, comprising a memory, a transceiver, and a processor,
wherein the memory is configured to store a computer program; the transceiver is configured to receive and transmit data under the control of the processor; and the processor is configured to read the computer program from the memory to perform the following operations:

transmitting packet loss information of at least one packet data unit set (PDU set) in a quality of service (QoS) flow to a second network device,
wherein the first network device is a source base station or a first distributed unit (DU);
in a case where the first network device is the source base station, the second network device is a target base station; or
in a case where the first network device is the first distributed unit (DU), the second network device is a first centralized unit (CU) connected to the first DU.

**23.** The apparatus according to claim 22, wherein the packet loss information comprises at least one of the following:

a first packet loss quantity, wherein the first packet loss quantity comprises a quantity of erroneously transmitted PDU sets among the at least one PDU set that has been already transmitted by a first network device side; or
a second packet loss quantity, wherein the second packet loss quantity comprises a quantity of erroneously transmitted PDUs by a first network device side among an incompletely transmitted PDU set by the first network device side of the at least one PDU set, wherein the incompletely transmitted PDU set comprises a plurality of PDUs.

**24.** The apparatus according to claim 22 or 23, wherein the processor is further configured to implement the following steps:

transmitting the packet loss information of the at least one PDU set in the QoS flow to the target base station through an Xn interface signaling or a header of a data packet for data forwarding; or
transmitting the packet loss information of the at least one PDU set in the QoS flow to the first CU through an F1 interface signaling.

**25.** The apparatus according to claim 22 or 23, wherein in a case where the first network device is the first DU and the second network device is the first CU, the processor is further configured to implement the following steps:
transmitting the packet loss information of the at least one PDU set in the QoS flow to the first CU according to a reporting period or a reporting request transmitted by the first CU.

**26.** The apparatus according to claim 23, wherein the processor is further configured to implement the following steps:

obtaining update indication information transmitted by the second network device;

determining an updated quantity of erroneously transmitted PDU sets in the QoS flow based on the update indication information; and

determining a first PDU set error rate (PSER) based on the updated quantity of the erroneously transmitted PDU sets in the QoS flow, wherein the first PSER is used to indicate a ratio of the updated quantity of the erroneously transmitted PDU sets in the QoS flow to a quantity of the at least one PDU set in the QoS flow.

27. The apparatus according to claim 26, wherein the update indication information is used to indicate at least one of the following:

whether the incompletely transmitted PDU set in the at least one PDU set is the erroneously transmitted PDU set;
a third packet loss quantity, wherein the third packet loss quantity comprises a quantity of erroneously transmitted PDUs by a target base station side or a first CU side, among remaining PDUs in the incompletely transmitted PDU set of the at least one PDU set excluding PDUs already transmitted by the first network device side; or
a fourth packet loss quantity, wherein the fourth packet loss quantity comprises a quantity of erroneously transmitted PDU sets by a target base station side or a first CU side among remaining PDU sets in the QoS flow excluding the PDU set that has been already transmitted by the first network device side.

28. The apparatus according to claim 26 or 27, wherein the processor is further configured to implement the following steps:
performing resource scheduling for the QoS flow based on the first PSER.

29. An information transmission apparatus, applied to a second network device, comprising a memory, a transceiver, and a processor,
wherein the memory is configured to store a computer program; the transceiver is configured to receive and transmit data under the control of the processor; and the processor is configured to read the computer program from the memory to perform the following operations:

obtaining packet loss information of at least one packet data unit set (PDU set) in a quality of service (QoS) flow transmitted by a first network device, wherein the first network device is a source base station or a first distributed unit (DU), in a case where the first network device is the source base station, the second network device is a target base station, or in a case where the first network device is the first distributed unit (DU), the second network device is a first centralized unit (CU) connected to the first DU; and
executing, by the second network device, one or more of the following actions based on the packet loss information:

performing resource scheduling for the QoS flow;
establishing a data transmission channel for the QoS flow; or
transmitting update indication information to the first network device, wherein the update indication information is used to indicate an updated quantity of erroneously transmitted PDU sets in the QoS flow to the first network device.

30. The apparatus according to claim 29, wherein the packet loss information comprises at least one of the following:

a first packet loss quantity, wherein the first packet loss quantity comprises a quantity of erroneously transmitted PDU sets among the at least one PDU set that has been already transmitted by a first network device side; or
a second packet loss quantity, wherein the second packet loss quantity comprises a quantity of erroneously transmitted PDUs by a first network device side among an incompletely transmitted PDU set by the first network device side of the at least one PDU set, wherein the incompletely transmitted PDU set comprises a plurality of PDUs.

31. The apparatus according to claim 29 or 30, wherein the processor is further configured to implement the following steps:

obtaining the packet loss information of the at least one PDU set in the QoS flow through an Xn interface signaling or a header of a data packet for data forwarding; or
obtaining the packet loss information of the at least one PDU set in the QoS flow through an F1 interface signaling.

32. The apparatus according to claim 30, wherein the processor is further configured to implement the following steps:

in a case where the first network device is the source base station and the second network device is the target base station, performing resource scheduling for the QoS flow, or establishing a data transmission channel for the QoS flow based on the packet loss information of the at least one PDU set in the QoS flow; or

in a case where the first network device is the first DU and the second network device is the first CU, establishing a data transmission channel for the QoS flow, or transmitting the update indication information to the first network device.

33. The apparatus according to claim 32, wherein the processor is further configured to implement the following steps: in a case where the packet loss information comprises the second packet loss quantity, performing, by the second network device, resource scheduling for the QoS flow based on the second packet loss quantity; or, in a case where the packet loss information comprises the first packet loss quantity, establishing, by the second network device, the data transmission channel for the QoS flow based on the first packet loss quantity.

34. The apparatus according to claim 33, wherein the processor is further configured to implement the following steps:

determining a second PSER based on the second packet loss quantity, wherein the second PSER is used to indicate a ratio of a quantity of erroneously transmitted PDU sets among at least one transmitted PDU set in the QoS flow to a quantity of the at least one transmitted PDU set, after the incompletely transmitted PDU set from the first network device side has been completely transmitted by the second network device side; and

performing resource scheduling for the QoS flow based on the second PSER.

35. The apparatus according to claim 34, wherein the processor is further configured to implement the following steps:

obtaining a determination result based on the second packet loss quantity and the third packet loss quantity, wherein the determination result is used to indicate whether the incompletely transmitted PDU set is the erroneously transmitted PDU set, and the third packet loss quantity comprises a quantity of erroneously transmitted PDUs by a target base station side or a first CU side, among remaining PDUs in the incompletely transmitted PDU set of the at least one PDU set excluding PDUs already transmitted by the first network device side; and

determining the second PSER based on the determination result.

36. The apparatus according to claim 35, wherein the processor is further configured to implement the following steps:

in a case where a target packet loss quantity is greater than or equal to a first preset threshold, determining the determination result to be that the incompletely transmitted PDU set is the erroneously transmitted PDU set; or in a case where a ratio of a target packet loss quantity to a first transmission quantity is greater than a second preset threshold, determining the determination result to be that the incompletely transmitted PDU set is the erroneously transmitted PDU set,

wherein the target packet loss quantity is determined based on a sum of the second packet loss quantity and the third packet loss quantity, and the first transmission quantity is a quantity of PDUs comprised in the incompletely transmitted PDU set.

37. The apparatus according to claim 35 or 36, wherein the processor is further configured to implement the following steps:

updating the quantity of the erroneously transmitted PDU sets in the QoS flow, in a case where the determination result indicates that the incompletely transmitted PDU set is the erroneously transmitted PDU set; and determining the second PSER based on a ratio of the updated quantity of the erroneously transmitted PDU sets in the QoS flow to a quantity of the at least one PDU set already transmitted in the QoS flow.

38. The apparatus according to claim 35, wherein in a case where the second network device is the target base station, the second network device comprises a second CU and at least one second DU; the processor is further configured to implement the following steps: obtaining, by the second CU or the at least one second DU of the second network device, the determination result based on the second packet loss quantity and the third packet loss quantity.

39. The apparatus according to claim 38, wherein the processor is further configured to implement the following steps: transmitting, by the second CU of the second network device, the determination result to the at least one second DU of the second network device.

40. The apparatus according to claim 38, wherein the processor is further configured to implement the following steps: obtaining, by the at least one second DU of the second network device, the second packet loss quantity transmitted by the second CU of the second network device, wherein the second packet loss quantity is obtained by the second CU of the second network device from the first network device.

41. The apparatus according to claim 32, wherein the processor is further configured to implement the following steps:

transmitting, by the second network device, the update indication information to the first network device, in a case where the packet loss information comprises the second packet loss quantity; or establishing, by the second network device, the data transmission channel for the QoS flow, in a case where the packet loss information comprises the first packet loss quantity.

42. The apparatus according to claim 32 or 41, wherein the update indication information is used to indicate at least one of the following:

whether the incompletely transmitted PDU set in the at least one PDU set is the erroneously transmitted PDU set; a third packet loss quantity, wherein the third packet loss quantity comprises a quantity of erroneously transmitted PDUs by a target base station side or a first CU side, among remaining PDUs in the incompletely transmitted PDU set of the at least one PDU set excluding PDUs already transmitted by the first network device side; or a fourth packet loss quantity, wherein the fourth packet loss quantity comprises a quantity of erroneously transmitted PDU sets by a target base station side or a first CU side among remaining PDU sets in the QoS flow excluding the PDU set that has been already transmitted by the first network device side.

43. An information transmission apparatus, applied to a first network device, comprising:

a first transmitting unit, configured to transmit packet loss information of at least one packet data unit set (PDU set) in a quality of service (QoS) flow to a second network device, wherein the first network device is a source base station or a first distributed unit (DU); in a case where the first network device is the source base station, the second network device is a target base station; or in a case where the first network device is the first distributed unit (DU), the second network device is a first centralized unit (CU) connected to the first DU.

44. The apparatus according to claim 43, wherein the packet loss information comprises at least one of the following:

a first packet loss quantity, wherein the first packet loss quantity comprises a quantity of erroneously transmitted PDU sets among the at least one PDU set that has been already transmitted by a first network device side; or a second packet loss quantity, wherein the second packet loss quantity comprises a quantity of erroneously transmitted PDUs by a first network device side among an incompletely transmitted PDU set by the first network device side of the at least one PDU set, wherein the incompletely transmitted PDU set comprises a plurality of PDUs.

45. The apparatus according to claim 43 or 44, wherein the first transmitting unit is configured to:

transmit the packet loss information of the at least one PDU set in the QoS flow to the target base station through an Xn interface signaling or a header of a data packet for data forwarding, in a case where the first network device is the source base station and the second network device is the target base station; or transmit the packet loss information of the at least one PDU set in the QoS flow to the first CU through an F1 interface signaling in a case where the first network device is the first DU and the second network device is the first CU.

46. The apparatus according to claim 43 or 44, wherein in a case where the first network device is the first DU and the second network device is the first CU, the first transmitting unit is configured to transmit the packet loss information of the at least one PDU set in the QoS flow to the first CU according to a reporting period or a reporting request transmitted by the first CU.

47. The apparatus according to claim 44, further comprising:

a second obtaining unit, configured to obtain, by the first network device, update indication information transmitted by the second network device, in a case where the packet loss information of the at least one PDU set in the QoS flow comprises the second packet loss quantity;

an update unit, configured to determine an updated quantity of erroneously transmitted PDU sets in the QoS flow based on the update indication information; and

a third obtaining unit, configured to determine a first PDU set error rate (PSER) based on the updated quantity of the erroneously transmitted PDU sets in the QoS flow, wherein the first PSER is used to indicate a ratio of the updated quantity of the erroneously transmitted PDU sets in the QoS flow to a quantity of the at least one PDU set in the QoS flow.

48. The apparatus according to claim 47, wherein the update indication information is used to indicate at least one of the following:

whether the incompletely transmitted PDU set in the at least one PDU set is the erroneously transmitted PDU set;

a third packet loss quantity, wherein the third packet loss quantity comprises a quantity of erroneously transmitted PDUs by a target base station side or a first CU side, among remaining PDUs in the incompletely transmitted PDU set of the at least one PDU set excluding PDUs already transmitted by the first network device side; or

a fourth packet loss quantity, wherein the fourth packet loss quantity comprises a quantity of erroneously transmitted PDU sets by a target base station side or a first CU side among remaining PDU sets in the QoS flow excluding the PDU set that has been already transmitted by the first network device side.

49. The apparatus according to claim 47 or 48, further comprising:

a scheduling unit, configured to perform resource scheduling for the QoS flow based on the first PSER.

50. An information transmission apparatus, applied to a second network device, comprising:

a first obtaining unit, configured to obtain packet loss information of at least one packet data unit set (PDU set) in a quality of service (QoS) flow transmitted by a first network device, wherein the first network device is a source base station or a first distributed unit (DU), in a case where the first network device is the source base station, the second network device is a target base station, or in a case where the first network device is the first distributed unit (DU), the second network device is a first centralized unit (CU) connected to the first DU; and

an execution unit, configured to execute one or more of the following actions based on the packet loss information:

performing resource scheduling for the QoS flow;

establishing a data transmission channel for the QoS flow; or

transmitting update indication information to the first network device, wherein the update indication information is used to indicate an updated quantity of erroneously transmitted PDU sets in the QoS flow to the first network device.

51. The apparatus according to claim 50, wherein the packet loss information comprises at least one of the following:

a first packet loss quantity, wherein the first packet loss quantity comprises a quantity of erroneously transmitted PDU sets among the at least one PDU set that has been already transmitted by a first network device side; or

a second packet loss quantity, wherein the second packet loss quantity comprises a quantity of erroneously transmitted PDUs by a first network device side among an incompletely transmitted PDU set by the first network device side of the at least one PDU set, wherein the incompletely transmitted PDU set comprises a plurality of PDUs.

52. The apparatus according to claim 50 or 51, wherein the first obtaining unit is configured to:

obtain the packet loss information of the at least one PDU set in the QoS flow to the target base station through an Xn interface signaling or a header of a data packet for data forwarding, in a case where the first network device is the source base station and the second network device is the target base station; or

obtain the packet loss information of the at least one PDU set in the QoS flow to the first CU through an F1 interface signaling in a case where the first network device is the first DU and the second network device is the first CU.

53. The apparatus according to claim 51, further comprising: in a case where the first network device is the source base station and the second network device is the target base station, performing resource scheduling for the QoS flow, or establishing a data transmission channel for the QoS flow based on the packet loss information of the at least one PDU set in the QoS flow; or

in a case where the first network device is the first DU and the second network device is the first CU, establishing a data transmission channel for the QoS flow, or transmitting the update indication information to the first network device.

54. The apparatus according to claim 51, wherein the execution unit is configured to:

in a case where the packet loss information comprises the second packet loss quantity, performing, by the second network device, resource scheduling for the QoS flow based on the second packet loss quantity; or, in a case where the packet loss information comprises the first packet loss quantity, establishing the data transmission channel for the QoS flow based on the first packet loss quantity.

55. The apparatus according to claim 54, wherein the execution unit comprises:

a determination subunit, configured to determine a second PSER based on the second packet loss quantity, wherein the second PSER is used to indicate a ratio of a quantity of erroneously transmitted PDU sets among at least one transmitted PDU set in the QoS flow to a quantity of the at least one transmitted PDU set, after the incompletely transmitted PDU set from the first network device side has been completely transmitted by the second network device side; and

a scheduling subunit, configured to perform resource scheduling for the QoS flow based on the second PSER.

56. The apparatus according to claim 55, wherein the determination subunit comprises:

a judgement module, configured to obtain a determination result based on the second packet loss quantity and the third packet loss quantity, wherein the determination result is used to indicate whether the incompletely transmitted PDU set is the erroneously transmitted PDU set, and the third packet loss quantity comprises a quantity of erroneously transmitted PDUs by a target base station side or a first CU side, among remaining PDUs in the incompletely transmitted PDU set of the at least one PDU set excluding PDUs already transmitted by the first network device side; and

a determining module, configured to determine the second PSER based on the determination result.

57. The apparatus according to claim 56, wherein the judgement module is configured to:

in a case where a target packet loss quantity is greater than or equal to a first preset threshold, determine the determination result to be that the incompletely transmitted PDU set is the erroneously transmitted PDU set; or in a case where a ratio of a target packet loss quantity to a first transmission quantity is greater than a second preset threshold, determine the determination result to be that the incompletely transmitted PDU set is the erroneously transmitted PDU set,

wherein the target packet loss quantity is determined based on a sum of the second packet loss quantity and the third packet loss quantity, and the first transmission quantity is a quantity of PDUs comprised in the incompletely transmitted PDU set.

58. The apparatus according to claim 56 or 57, wherein the determining module comprises:

an update submodule, configured to update the quantity of the erroneously transmitted PDU sets in the QoS flow, in a case where the determination result indicates that the incompletely transmitted PDU set is the erroneously transmitted PDU set; and

a determining submodule, configured to determine the second PSER based on a ratio of the updated quantity of the erroneously transmitted PDU sets in the QoS flow to a quantity of the at least one PDU set already transmitted in the QoS flow.

59. The apparatus according to claim 56, wherein in a case where the second network device is the target base station, the second network device comprises a second CU and at least one second DU,

the judgement module is configured to obtain, by the second CU or the at least one second DU of the second network device, the determination result based on the second packet loss quantity and the third packet loss quantity.

60. The apparatus according to claim 59, further comprising:

a second transmitting unit, configured to transmit, by the second CU of the second network device, the determination result to the at least one second DU of the second network device in a case that the judgement module obtains the determination result through the second CU of the second network device.

61. The apparatus according to claim 59, further comprising:
a fourth obtaining unit, configured to obtain, by the at least one second DU of the second network device, the second packet loss quantity transmitted by the second CU of the second network device in a case that the judgement module obtains the determination result through the at least one second DU of the second network device, wherein the second packet loss quantity is obtained by the second CU of the second network device from the first network device.

62. The apparatus according to claim 53, wherein the execution unit is configured to:

transmit, by the second network device, the update indication information to the first network device, in a case where the packet loss information comprises the second packet loss quantity; or
establish, by the second network device, the data transmission channel for the QoS flow, in a case where the packet loss information comprises the first packet loss quantity.

63. The apparatus according to claim 53 or 62, wherein the update indication information is used to indicate at least one of the following:

whether the incompletely transmitted PDU set in the at least one PDU set is the erroneously transmitted PDU set;
a third packet loss quantity, wherein the third packet loss quantity comprises a quantity of erroneously transmitted PDUs by a target base station side or a first CU side, among remaining PDUs in the incompletely transmitted PDU set of the at least one PDU set excluding PDUs already transmitted by the first network device side; or
a fourth packet loss quantity, wherein the fourth packet loss quantity comprises a quantity of erroneously transmitted PDU sets by a target base station side or a first CU side among remaining PDU sets in the QoS flow excluding the PDU set that has been already transmitted by the first network device side.

64. A processor readable storage medium, storing a computer program, wherein the computer program is configured to cause the processor to perform steps of the information transmission method according to any one of claims 1 to 7, or to perform steps of the information processing method according to any one of claims 8 to 21.

FIG. 1

transmitting, by a first network device, packet loss information of at least one packet data unit set (PDU set) in a quality of service (QoS) flow to a second network device

201

FIG. 2

obtaining, by a second network device, packet loss information of at least one packet data unit set (PDU set) in a quality of service (QoS) flow transmitted by a first network device

301

executing, by the second network device, one or more of the following actions based on the packet loss information: performing resource scheduling for the QoS flow; establishing a data transmission channel for the QoS flow; or transmitting update indication information to the first network device

302

FIG. 3

processor 410

bus interface

memory 420

transceiver 400

FIG. 4

first transmitting unit — 501

FIG. 5

first obtaining unit — 601

execution unit — 602

FIG. 6

## INTERNATIONAL SEARCH REPORT

| International application No. |
|---|
| **PCT/CN2024/080483** |

**A.    CLASSIFICATION OF SUBJECT MATTER**

H04W28/02(2009.01)i;  H04L27/00(2006.01)i

According to International Patent Classification (IPC) or to both national classification and IPC

**B.    FIELDS SEARCHED**

Minimum documentation searched (classification system followed by classification symbols)

IPC:H04W28/-; H04W36/-; H04L1/-; H04L27/-; H04L47/-

Documentation searched other than minimum documentation to the extent that such documents are included in the fields searched

Electronic data base consulted during the international search (name of data base and, where practicable, search terms used)

CNTXT, ENTXTC, CNABS, CNKI, 百度文库, BAIDU WENKU: PDU集, 错, 错误, 丢, 丢包, 丢失, 分布, 分组数据单元集, 分组数据单元集合, 基站, 集中, 扩展现实, 目标基站, 失败, 误, 误包, 源基站, CU, DU, PSER, source, target, XR, PDU set, PDU-set VEN, EPTXT, USTXT, WOTXT, 3GPP, IEEE, DWPI: PDU-set, PDU set, XR, source, target, BS, g-NB, CU, DU, lost, discard, loss, packet loss, PSER

**C.    DOCUMENTS CONSIDERED TO BE RELEVANT**

| Category* | Citation of document, with indication, where appropriate, of the relevant passages | Relevant to claim No. |
|---|---|---|
| X | WO 2022052129 A1 (HUAWEI TECHNOLOGIES CO., LTD.) 17 March 2022 (2022-03-17) description, paragraphs [117]-[223] and [250]-[304] | 1-64 |
| A | CN 113261340 A (GUANGDONG OPPO MOBILE TELECOMMUNICATIONS CORP., LTD.) 13 August 2021 (2021-08-13) entire document | 1-64 |
| A | CN 116156560 A (QUECTEL WIRELESS SOLUTIONS CO., LTD.) 23 May 2023 (2023-05-23) entire document | 1-64 |
| A | WO 2023023414 A2 (FUTUREWEI TECHNOLOGIES, INC.) 23 February 2023 (2023-02-23) entire document | 1-64 |
| A | CN 110972181 A (HUAWEI TECHNOLOGIES CO., LTD.) 07 April 2020 (2020-04-07) entire document | 1-64 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **06 May 2024** | **09 May 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2024/080483**

| Patent document cited in search report | | | Publication date (day/month/year) | Patent family member(s) | | | Publication date (day/month/year) |
|---|---|---|---|---|---|---|---|
| WO | 2022052129 | A1 | 17 March 2022 | CN | 116097709 | A | 09 May 2023 |
| CN | 113261340 | A | 13 August 2021 | WO | 2020199103 | A1 | 08 October 2020 |
| | | | | CN | 113261340 | A | 13 August 2021 |
| | | | | CN | 113261340 | B | 18 October 2022 |
| CN | 116156560 | A | 23 May 2023 | | None | | |
| WO | 2023023414 | A2 | 23 February 2023 | WO | 2023023414 | A3 | 30 March 2023 |
| CN | 110972181 | A | 07 April 2020 | WO | 2020063926 | A1 | 02 April 2020 |
| | | | | US | 2021219156 | A1 | 15 July 2021 |
| | | | | US | 11924657 | B2 | 05 March 2024 |
| | | | | EP | 3852427 | A1 | 21 July 2021 |
| | | | | EP | 3852427 | A4 | 24 November 2021 |
| | | | | CN | 110972181 | B | 07 September 2021 |

Form PCT/ISA/210 (patent family annex) (July 2022)

**EP 4 723 727 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310603418